(19) **Europäisches Patentamt**
**European Patent Office**
**Office européen des brevets**

(11) **EP 3 870 937 B1**

(12) **FASCICULE DE BREVET EUROPEEN**

(45) Date de publication et mention
de la délivrance du brevet:
**31.12.2025 Bulletin 2026/01**

(21) Numéro de dépôt: **19813631.9**

(22) Date de dépôt: **28.10.2019**

(51) Classification Internationale des Brevets (IPC):
*G01P 15/093* (2006.01)   *G01P 15/18* (2013.01)
*G01P 15/08* (2006.01)   *G01P 15/02* (2013.01)
*G01C 19/58* (2006.01)

(52) Classification Coopérative des Brevets (CPC):
**G01C 19/58; G01P 15/093; G01P 15/18**

(86) Numéro de dépôt international:
**PCT/FR2019/052564**

(87) Numéro de publication internationale:
**WO 2020/084272 (30.04.2020 Gazette 2020/18)**

(54) **SYSTÈME ET PROCÉDÉ D'INTERFEROMÈTRE ATOMIQUE MULTI-AXES**

**SYSTEM UND VERFAHREN FÜR MEHRACHSIGES ATOMINTERFEROMETER**

**MULTI-AXIS ATOM INTERFEROMETER SYSTEM AND METHOD**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.10.2018 FR 1859950**

(43) Date de publication de la demande:
**01.09.2021 Bulletin 2021/35**

(73) Titulaires:
• **EXAIL**
**78100 Saint-Germain-en-Laye (FR)**
• **Institut d'Optique Graduate School**
**91120 Palaiseau (FR)**
• **Centre national de la recherche scientifique**
**75016 Paris (FR)**
• **UNIVERSITE DE BORDEAUX**
**33000 Bordeaux (FR)**

(72) Inventeurs:
• **BARRETT, David Brynle**
**33400 TALENCE (FR)**

• **CHEINEY, Pierrick**
**78100 Saint-Germain-en-Laye (FR)**
• **BOUYER, Philippe**
**33400 TALENCE (FR)**

(74) Mandataire: **Jacobacci Coralis Harle**
**32, rue de l'Arcade**
**75008 Paris (FR)**

(56) Documents cités:
**FR-A1- 2 877 430   US-A1- 2016 298 967**

• **CANUEL B ET AL: "6-axis inertial sensor using
cold-atom interferometry", ARXIV.ORG,
CORNELL UNIVERSITY LIBRARY, 201 OLIN
LIBRARY CORNELL UNIVERSITY ITHACA, NY
14853, 7 April 2006 (2006-04-07), XP080235504,
DOI: 10.1103/PHYSREVLETT.97.010402**
• **BARRETT B ET AL: "Inertial quantum sensors
using light and matter", ARXIV.ORG, CORNELL
UNIVERSITY LIBRARY, 201 OLIN LIBRARY
CORNELL UNIVERSITY ITHACA, NY 14853, 10
March 2016 (2016-03-10), XP080963689, DOI:
10.1088/0031-8949/91/5/053006**

**Description**

DOMAINE TECHNIQUE AUQUEL SE RAPPORTE L'INVENTION

La présente invention concerne de manière générale le domaine des senseurs inertiels basés sur un interféromètre atomique pour des mesures d'accélération et/ou de rotation.

Elle concerne plus particulièrement un senseur inertiel basé sur un interféromètre atomique pour des mesures simultanées d'accélération et de rotation suivant plusieurs axes.

Elle concerne plus particulièrement un senseur multi-axes simultané pour des applications en navigation inertielle, gyrométrie, accélérométrie, géologie, gravimétrie, gradiométrie, géodésie, sismologie ou de physique fondamentale.

ARRIERE-PLAN TECHNOLOGIQUE

Les senseurs inertiels basés sur les interféromètres atomiques sont à l'aube de révolutionner le domaine de la navigation inertielle car ils présentent à la fois une grande sensibilité et une grande exactitude de mesure. Afin de calculer la trajectoire d'un objet mobile, il est cependant nécessaire de connaitre toutes les composantes de ses vecteurs accélération et rotation.

Les interféromètres atomiques développés jusqu'à ce jour sont sensibles aux effets inertiels selon un seul axe par cycle de mesure. Cet axe est déterminé par la direction de propagation de la lumière qui forme les séparatrices et miroirs atomiques de l'interféromètre. Par exemple, dans le cas d'un accéléromètre ou d'un gravimètre, l'appareil est sensible à l'accélération selon un axe parallèle au vecteur d'onde optique k.

Il existe des systèmes capables de mesurer des composantes d'accélération et/ou de rotation séquentiellement suivant plusieurs axes.

On connaît notamment du document B. Canuel et al. « Six-Axis inertial sensor using cold-atom interferometry », PRL 97, 010402 (2006), un dispositif d'interférométrie atomique dans lequel une séquence de trois paires de faisceaux Raman contra-propagatifs est appliquée séquentiellement suivant trois directions orthogonales de l'espace à deux nuages d'atomes lancés sur des trajectoires paraboliques pour former trois interféromètres atomiques et mesurer successivement les composantes de rotation et d'accélération suivant chacun des trois axes orthogonaux.

On connaît également du document FR 2 877 430 A1 un système de mesure de grandeurs inertielles par interférométrie atomique avec, en présence d'un champ d'accélération continue, l'émission de bouffées d'atomes lents depuis une source unique selon la direction de l'accélération continue et à contresens de celle-ci, la manipulation cohérente des atomes en divers emplacements de leur trajectoire.

On connaît aussi du document Xuejian Wu et al., « Multiaxis atom interferometry with a single-diode laser and a pyramidal magneto-optical trap », Optica 4, 1545 (2018), un système comprenant un piège magnéto-optique de forme pyramidale avec un angle au sommet de 90 degrés, dans lequel un nuage d'atomes est piégé et auquel cinq paires de faisceaux Raman contra-propageant sont appliquées : quatre paires inclinées perpendiculairement à chaque face individuelle de la pyramide et une autre paire suivant l'axe vertical passant par le sommet, pour former les interféromètres de type Mach-Zehnder en configuration papillon (butterfly) avec 4 impulsions ($\pi/2$- $\pi$ - $\pi$ - $\pi/2$) de manière à mesurer successivement les accélérations et rotations suivant chacun des trois axes orthogonaux.

Ces systèmes d'interféromètre atomique permettent des mesures inertielles multi-axes. Toutefois ces systèmes nécessitent de modifier la direction du vecteur d'onde optique k entre chaque séquence ou cycle de mesure. Par conséquent, ces mesures inertielles multi-axes sont séquentielles.

Pour certaines applications, une base de mesure complète suivant trois axes d'accélération et de rotation est nécessaire pour calculer la trajectoire et l'orientation d'un objet en mouvement. Or, les mouvements inertiels varient généralement dans le temps. Il est donc souhaitable d'acquérir des mesures inertielles synchronisées pour éviter des erreurs de calcul.

Il existe un besoin pour des mesures inertielles simultanées selon plusieurs axes orthogonaux, dans un espace à deux dimensions et de préférence à trois dimensions.

OBJET DE L'INVENTION

Afin de remédier à l'inconvénient précité de l'état de la technique, la présente invention propose un système d'interféromètre atomique multi-axes. Plus particulièrement, nous proposons selon l'invention, un système d'interféromètre atomique multi-axes comprenant une source d'atomes froids, une source laser modulée temporellement pour générer une séquence d'impulsions lumineuses comprenant au moins une première impulsion lumineuse incidente sur la source d'atomes froids à un instant t initial, une deuxième impulsion lumineuse à un instant égal à t+T et une dernière impulsion lumineuse à un instant égal à t+2T, la première impulsion lumineuse étant configurée de manière à séparer spatialement la source d'atomes froids en au moins un premier nuage d'atomes se propageant suivant une première trajectoire le long d'un premier axe (X) et un deuxième nuage d'atomes se propageant suivant une deuxième trajectoire le long d'un deuxième axe (Y), le deuxième axe (Y) étant incliné par rapport au premier axe (X), la deuxième impulsion lumineuse étant adaptée pour défléchir spatialement la première trajectoire d'au moins une partie du premier nuage d'atomes suivant le deuxième axe (Y) vers un premier point et simultanément la deuxième trajectoire d'au moins une partie du deuxième nuage d'atomes suivant le premier axe (X) vers le premier point ; la dernière impulsion lumineuse étant adaptée pour recombiner ladite au moins une partie du premier nuage d'atomes et ladite au moins une partie du deuxième nuage d'atomes au premier point et former un interféromètre atomique de Mach-Zehnder à au moins deux dimensions, un système de détection configuré pour mesurer un premier déphasage interférométrique entre ladite au moins une partie du premier nuage d'atomes et ladite au moins une partie du deuxième nuage d'atomes, le premier déphasage interférométrique étant accumulé sur lesdites première et deuxième trajectoires entre la première impulsion lumineuse et la dernière impulsion lumineuse.

Cette géométrie multidimensionnelle permet de mesurer simultanément des accélérations et rotations multiaxes avec une seule source d'atomes en un seul cycle.

Ces impulsions 2D (respectivement 3D) sont constituées chacune de deux (respectivement trois) paires de faisceaux lumineux contra-propageants qui induisent des transitions Raman à deux photons sélectives en vitesse entre deux états fondamentaux de l'atome. Pour chaque impulsion lumineuse, les paires de faisceaux lumineux sont orthogonales deux à deux.

Considérons par exemple, le cas en deux dimensions, où, pour chaque impulsion, une paire de faisceaux est alignée selon la direction X et une autre paire de faisceaux est alignée selon la direction Y. En utilisant une séquence d'impulsions 2D de type Mach-Zehnder $\pi/2$ - $\pi$ - $\pi/2$, séparées d'un temps de chute libre T, les atomes sont diffractés selon deux trajectoires orthogonales (X et Y). Du fait de leur trajectoire, les atomes accumulent une différence de phase proportionnelle aux composantes d'accélération $a_x$ et $a_y$, ainsi qu'à la rotation selon l'axe perpendiculaire Z ($\Omega_z$). Notons que cette troisième composante n'est pas présente dans le cas d'interféromètres en une dimension. Lorsque les deux trajectoires se superposent, les paquets d'ondes interfèrent et la différence de phase peut être lue comme un changement du nombre d'atomes dans chaque état interne. Le nombre relatif d'atomes dans un état interne est alors sensible aux trois composantes inertielles : $a_x$, $a_y$ and $\Omega_z$. Afin d'isoler chaque terme, un mode de réalisation de la présente divulgation propose d'utiliser simultanément quatre interféromètres 2D. Les quatre interféromètres correspondent à quatre directions initiales opposées et sont issues de la même source atomique en utilisant la technique de double diffraction 2D.

Ces principes peuvent être étendus à des géométries 3D, où six composantes inertielles ($a_x$, $a_y$, $a_z$, $\Omega_x$, $\Omega_y$, and $\Omega_z$) peuvent être mesurées grâce à trois interféromètres 2D dans des plans mutuellement orthogonaux.

D'autres caractéristiques non limitatives et avantageuses du système d'interféromètre atomique multi-axes conforme à l'invention, prises individuellement ou selon toutes les combinaisons techniquement possibles, sont les suivantes :

- la première impulsion lumineuse est divisée en une première paire de faisceaux lumineux se propageant contra-propagativement suivant le premier axe (X) vers la source d'atomes et une autre première paire de faisceaux lumineux se propageant contra-propagativement suivant le deuxième axe (Y) vers la source d'atomes froids, lesdites premières paires de faisceaux lumineux étant incidentes simultanément sur la source d'atomes froids à l'instant t initial ;
- la deuxième impulsion lumineuse est divisée en une deuxième paire de faisceaux lumineux se propageant contra-propagativement suivant le premier axe (X) et une autre deuxième paire de faisceaux lumineux se propageant contra-propagativement suivant le deuxième axe (Y), lesdites deuxièmes paires de faisceaux lumineux étant incidentes simultanément sur ladite au moins une partie du premier nuage d'atomes et ladite au moins une partie du deuxième nuage d'atomes ;
- la dernière impulsion lumineuse est divisée en une dernière paire de faisceaux lumineux se propageant contra-propagativement suivant le premier axe (X) et une autre dernière paire de faisceaux lumineux se propageant contra-propagativement suivant le deuxième axe (Y) vers le premier point, lesdites dernières paires de faisceaux lumineux étant incidentes simultanément sur ladite au moins une partie du premier nuage d'atomes et ladite au moins une partie du deuxième nuage d'atomes au premier point.

De façon avantageuse, le système d'interféromètre atomique multi-axes comprend en outre un système de traitement du signal adapté pour extraire du premier déphasage interférométrique un premier signal fonction d'une première accélération ($a_x$) de la source d'atomes froids suivant le premier axe (X), d'une deuxième accélération ($a_y$) suivant le deuxième axe (Y) et d'une rotation ($Q_z$) autour d'un troisième axe (Z) incliné par rapport au premier axe (X) et au deuxième axe (Y).

Dans un mode de réalisation particulier, la première impulsion lumineuse est adaptée pour séparer spatialement par double diffraction la source d'atomes froids en un premier paquet d'atomes et un deuxième paquet d'atomes se propageant en sens mutuellement opposés suivant le premier axe (X) et/ou pour séparer spatialement par double diffraction la source d'atomes froids en un troisième paquet d'atomes et un quatrième paquet d'atomes se propageant en sens mutuellement opposés suivant le deuxième axe (Y), la deuxième impulsion lumineuse est adaptée pour défléchir simultanément une partie du premier paquet d'atomes suivant le deuxième axe (Y) et une partie du troisième paquet d'atomes suivant le premier axe (X) vers le premier point, et/ou pour défléchir simultanément une autre partie du premier paquet d'atomes suivant le deuxième axe (Y) et une partie du quatrième paquet d'atomes suivant le premier axe (X) vers un deuxième point et/ou pour défléchir simultanément une partie du deuxième paquet d'atomes suivant le deuxième axe (Y) et une autre partie du troisième paquet d'atomes suivant le premier axe (X) vers un troisième point et/ou pour défléchir simultanément une autre partie du deuxième paquet d'atomes suivant le deuxième axe (Y) et une autre partie du quatrième paquet d'atomes suivant le premier axe (X) vers un quatrième point, et la dernière impulsion lumineuse est adaptée pour recombiner au premier point la partie du premier paquet d'atomes et la partie du troisième paquet d'atomes formant un premier interféromètre atomique de Mach-Zehnder à deux dimensions dans un premier plan (XY), et/ou pour recombiner au deuxième point l'autre partie du premier paquet d'atomes et la partie du quatrième paquet d'atomes formant un deuxième interféromètre atomique de Mach-Zehnder à deux dimensions dans le premier plan (XY) et/ou pour recombiner au troisième point la partie du deuxième paquet d'atomes et l'autre partie du troisième paquet d'atomes formant un troisième interféromètre atomique de Mach-Zehnder à deux dimensions dans le premier plan (XY) et/ou pour recombiner au quatrième point l'autre partie du deuxième paquet d'atomes suivant le deuxième axe (Y) et l'autre partie du quatrième paquet d'atomes formant un quatrième interféromètre atomique de Mach-Zehnder à deux dimensions dans le premier plan (XY) ; le système de détection étant adapté pour mesurer en au moins trois points parmi les premier point, deuxième point, troisième point et quatrième point respectivement : le premier déphasage interférométrique du premier interféromètre atomique et/ou un deuxième déphasage interférométrique du deuxième interféromètre atomique et/ou un troisième déphasage interférométrique du troisième interféromètre atomique et/ou un quatrième déphasage interférométrique du quatrième interféromètre atomique.

Selon un aspect de ce mode de réalisation, le système de traitement du signal est adapté pour extraire la première accélération suivant le premier axe (X), la deuxième accélération suivant le deuxième axe (Y) et la rotation autour du troisième axe (Z) par combinaison linéaire d'au moins trois parmi les premier déphasage interférométrique, deuxième déphasage interférométrique, troisième déphasage interférométrique et quatrième déphasage interférométrique.

Selon un autre aspect de ce mode de réalisation, le système de détection comporte un détecteur d'image résolu spatialement adapté pour détecter simultanément au moins trois parmi le premier déphasage interférométrique, le deuxième déphasage interférométrique, le troisième déphasage interférométrique et le quatrième déphasage interférométrique.

Selon une variante, le système de détection comporte un premier détecteur adapté pour détecter le premier déphasage interférométrique autour du premier point, un deuxième détecteur adapté pour détecter le deuxième déphasage interférométrique autour du deuxième point, un troisième détecteur adapté pour détecter le troisième déphasage interférométrique autour du troisième point et/ou un quatrième détecteur adapté pour détecter le quatrième déphasage interférométrique autour du quatrième point.

Selon un mode de réalisation à 3D, la première impulsion lumineuse est encore divisée en une première paire de faisceaux lumineux se propageant contra-propagativement suivant le troisième axe (Z) vers la source d'atomes, lesdites premières paires de faisceaux lumineux étant incidentes simultanément sur la source d'atomes froids à l'instant t initial, de manière à séparer spatialement la source d'atomes froids en le premier nuage d'atomes se propageant suivant le premier axe (X), le deuxième nuage d'atomes se propageant suivant le deuxième axe (Y) et un troisième nuage d'atomes se propageant suivant le troisième axe (Z); la deuxième impulsion lumineuse étant adaptée pour séparer spatialement et défléchir le premier nuage d'atomes en un premier paquet d'atomes se propageant suivant le deuxième axe (Y) vers un premier point et un deuxième paquet d'atomes se propageant suivant le troisième axe (Z) vers un deuxième point; et pour séparer spatialement et défléchir le deuxième nuage d'atomes en un troisième paquet d'atomes se propageant suivant le premier axe (X) vers le premier point et un quatrième paquet d'atomes se propageant suivant le troisième axe (Z) vers un troisième point, et pour séparer spatialement et défléchir le troisième nuage d'atomes en un cinquième paquet d'atomes se propageant suivant le premier axe (X) vers un deuxième point et un sixième paquet d'atomes se propageant suivant le deuxième axe (Y) vers un troisième point ; la dernière impulsion lumineuse étant adaptée pour recombiner au premier point le premier paquet d'atomes et le troisième paquet d'atomes formant un premier interféromètre atomique de Mach-Zehnder à deux dimensions dans un premier plan (XY), et pour recombiner au deuxième point le deuxième paquet d'atomes et le cinquième paquet d'atomes formant un deuxième interféromètre atomique de Mach-Zehnder à deux dimensions dans un deuxième plan (XZ) et pour recombiner au troisième point le quatrième paquet d'atomes et le sixième paquet d'atomes formant un troisième interféromètre atomique de Mach-Zehnder à deux dimensions dans un troisième plan (YZ), et le système de détection étant adapté pour mesurer simultanément le premier déphasage interférométrique du premier interféromètre atomique de Mach-Zehnder, un deuxième déphasage interférométrique du deuxième interféromètre atomique de Mach-Zehnder et un troisième déphasage interférométrique du troisième interféromètre atomique de Mach-Zehnder.

Selon un aspect particulier de ce mode de réalisation, la deuxième impulsion lumineuse comprend trois paires de faisceaux lumineux adaptés pour séparer spatialement et défléchir le premier nuage d'atomes en un premier paquet d'atomes se propageant suivant le deuxième axe (Y) vers un premier point et un deuxième paquet d'atomes se propageant suivant le troisième axe (Z) vers un deuxième point; la deuxième impulsion lumineuse comprenant trois autres paires de faisceaux lumineux adaptées pour séparer spatialement et défléchir le deuxième nuage d'atomes en un troisième paquet d'atomes se propageant suivant le premier axe (X) vers le premier point et un quatrième paquet d'atomes se propageant suivant le troisième axe (Z) vers un troisième point, et la deuxième impulsion lumineuse comprenant encore trois autres paires de faisceaux lumineux adaptées pour séparer spatialement et défléchir le troisième nuage d'atomes en un cinquième paquet d'atomes se propageant suivant le premier axe (X) vers le deuxième point et un sixième paquet d'atomes se propageant suivant le deuxième axe (Y) vers le troisième point.

Selon un autre mode de réalisation, la dernière impulsion lumineuse étant divisée en deux paires de faisceaux lumineux adaptés pour recombiner au premier point le premier paquet d'atomes et le troisième paquet d'atomes formant un premier interféromètre atomique de Mach-Zehnder à deux dimensions dans un premier plan (XY), la dernière impulsion lumineuse est divisée en deux autres paires de faisceaux lumineux adaptés pour recombiner au deuxième point le deuxième paquet d'atomes et le cinquième paquet d'atomes formant un deuxième interféromètre atomique de Mach-Zehnder à deux dimensions dans un deuxième plan (XZ) et la dernière impulsion lumineuse est encore divisée en deux autres paires de faisceaux lumineux adaptés pour recombiner au troisième point le quatrième paquet d'atomes et le sixième paquet d'atomes formant un troisième interféromètre atomique de Mach-Zehnder à deux dimensions dans un troisième plan (YZ).

Selon une variante de ce mode de réalisation à 3D, le système de détection comporte un détecteur d'image résolu spatialement adapté pour détecter simultanément le premier déphasage interférométrique au premier point, le deuxième déphasage interférométrique au deuxième point et le troisième déphasage interférométrique au troisième point.

Selon une autre variante de ce mode de réalisation à 3D, le système de détection comporte un premier détecteur adapté pour détecter le premier déphasage interférométrique au premier point, un deuxième détecteur adapté pour détecter le deuxième déphasage interférométrique au deuxième point et un troisième détecteur adapté pour détecter le troisième déphasage interférométrique au troisième point.

L'invention concerne aussi un procédé d'interférométrie atomique multi-axes comprenant les étapes suivantes :

- génération d'une source d'atomes froids ;
- génération d'une séquence d'impulsions lumineuses comprenant au moins une première impulsion lumineuse incidente sur la source d'atomes froids à un instant t initial, une deuxième impulsion lumineuse à un instant égal à t+T et une dernière impulsion lumineuse à un instant égal à t+2T ;
- la première impulsion lumineuse étant configurée de manière à séparer spatialement la source d'atomes froids en au moins un premier nuage d'atomes se propageant suivant une première trajectoire le long d'un premier axe (X) et un deuxième nuage d'atomes) se propageant suivant une deuxième trajectoire le long d'un deuxième axe (Y), le deuxième axe (Y) étant incliné par rapport au premier axe (X) ;
- la deuxième impulsion lumineuse étant adaptée pour défléchir spatialement la première trajectoire d'au moins une partie du premier nuage d'atomes suivant le deuxième axe (Y) vers un premier point et simultanément la deuxième trajectoire d'au moins une partie du deuxième nuage d'atomes suivant le premier axe (X) vers le premier point ;
- la dernière impulsion lumineuse étant adaptée pour recombiner ladite au moins une partie du premier nuage d'atomes et ladite au moins une partie du deuxième nuage d'atomes au premier point et former un interféromètre atomique de Mach-Zehnder à au moins deux dimensions ;
- détection d'au moins un premier déphasage interférométrique entre ladite au moins une partie du premier nuage d'atomes et ladite au moins une partie du deuxième nuage d'atomes, le premier déphasage interférométrique étant accumulé sur lesdites première et deuxième trajectoires entre l'instant initial t et l'instant t+2T.

Le système d'interféromètre atomique multi-axes permet de diffracter des atomes selon une trajectoire 2D ou 3D, et de générer des interférences atomiques en plusieurs positions de l'espace. Le système d'interféromètre atomique multi-axes permet de créer plusieurs interféromètres simultanément à partir de la même source atomique et donc d'augmenter l'aire effective et la sensibilité globale aux effets inertiels. Il permet de mesurer simultanément plusieurs effets inertiels en utilisant une méthode de détection résolue spatialement pour détecter séparément les différents nuages d'atomes. Un tel système d'interféromètre atomique multi-axes permet d'isoler différentes composantes d'accélération ou de rotation en utilisant différentes combinaisons linéaires des phases inertielles obtenues pour des orientations initiales opposées. Il permet de rejeter le bruit de phase relatif du laser entre deux paires de faisceaux orthogonales ainsi que des effets systématiques entre interféromètres voisins, en utilisant une rejection de mode commun. Il permet de mesurer des rotations sans lancer initialement les atomes. Au lieu de cela, le lancement correspond à la première impulsion 2D. La vitesse de lancement initiale peut être connue avec une précision aussi bonne que la longueur d'onde du laser (typiquement 1 partie par milliard). La direction de la vitesse de lancement initiale peut être facilement changée en changeant le signe des deux vecteurs d'onde utilisés dans l'impulsion 2D. Ce système d'interféromètre atomique multi-axes permet de supprimer la dépendance en vitesse de lancement et accélération dans la mesure de phase sensible à la rotation grâce à la rejection de mode commun.

De cette manière, un gyroscope atomique peut bénéficier de la même précision absolue que les accéléromètres à atomes froids car toutes les quantités qui apparaissent dans la phase inertielle sensible à la rotation sont précisément connues.

L'invention est particulièrement intéressante pour les applications de navigation inertielle, où de fortes variations de rotations et d'accélération entre cycle de mesures compromettent la rejection de mode commun dans le cas d'une mesure séquentielle. L'invention propose également un système d'interféromètre atomique dans lequel :

- chaque impulsion lumineuse défléchit ou diffracte simultanément un nuage d'atomes le long de deux ou trois axes, déterminés par les vecteurs d'onde respectifs de chaque champ lumineux ;
- un dispositif de mesure adapté pour interagir simultanément et de manière séparée spatialement d'une part avec le premier paquet d'atomes en une première zone de l'espace et d'autre part avec le deuxième paquet d'atomes en une deuxième zone de l'espace, la première zone de l'espace et la deuxième zone de l'espace étant disjointes, pour en déduire un signal instantané représentatif d'une première accélération suivant le premier axe (X), d'une deuxième accélération suivant le deuxième axe (Y) et d'une rotation autour d'un troisième axe (Z) incliné par rapport au premier axe (X) et au deuxième axe (Y).
- le système de source lumineuse est adapté pour générer une autre première paire de faisceaux lumineux se propageant contra-propagativement suivant le troisième axe (Z) vers la source d'atomes, et dans lequel lesdites premières paire de faisceaux lumineux sont synchronisées et ont la même durée suivant les trois axes (X, Y, Z), de manière à séparer simultanément la source d'atomes froids en un premier paquet d'atomes suivant le premier axe (X), un deuxième paquet d'atomes suivant le deuxième axe (Y) et un troisième paquet d'atomes suivant le troisième axe (Z) ;
- un dispositif de mesure adapté pour interagir simultanément et de manière séparée spatialement avec le premier paquet d'atomes en une première zone de l'espace, le deuxième paquet d'atomes en une deuxième zone de l'espace et le troisième paquet d'atomes en une troisième zone de l'espace, la première zone de l'espace, la deuxième zone de l'espace et la troisième zone de l'espace étant disjointes deux à deux, pour en déduire en outre un signal représentatif d'une première accélération suivant le premier axe (X), d'une deuxième accélération suivant le deuxième axe (Y) et d'une rotation autour d'un troisième axe (Z) incliné par rapport au premier axe (X) et au deuxième axe (Y).

## DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

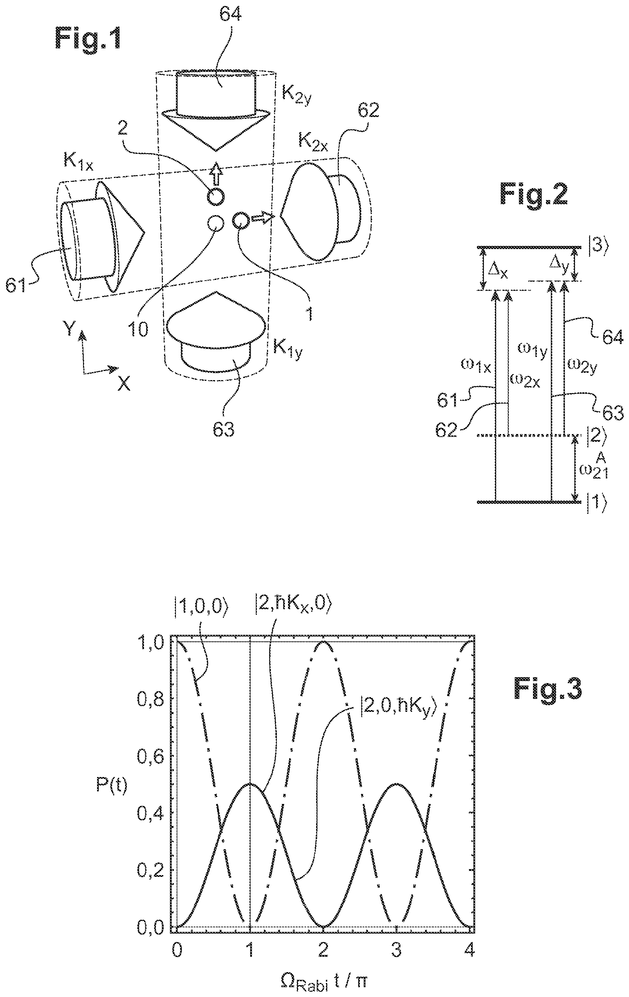

- la figure 1 représente schématiquement un mode de réalisation de séparatrice atomique à deux dimensions comprenant deux paires de faisceaux lumineux incidents sur une source d'atomes froids, ces deux paires étant issues d'une seule et même première impulsion et adaptées pour séparer spatialement la source d'atomes froids en deux nuages d'atomes se propageant suivant deux directions mutuellement transverses ;
- la figure 2 représente schématiquement les niveaux d'énergie et fréquences optiques de chacune des 4 faisceaux lumineux de la figure 1 ;
- la figure 3 représente l'évolution des niveaux de population de l'état atomique initial stationnaire $|1,0,0\rangle$ vers les états atomiques $|2,hK_x,0\rangle$ et $|2,0,hK_y\rangle$ en fonction de l'aire de la première impulsion de la figure 1;

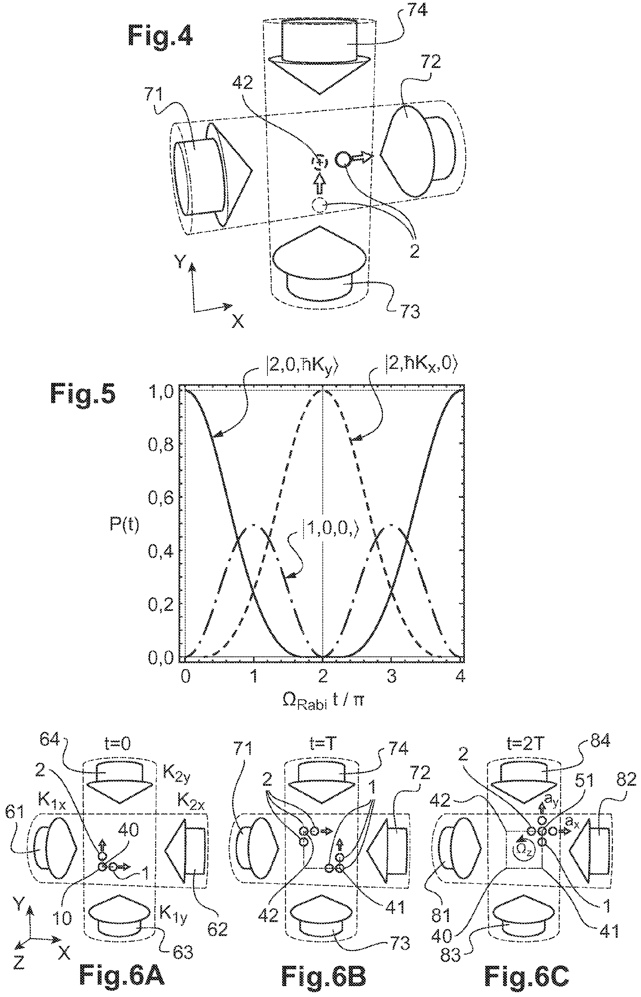

- la figure 4 représente schématiquement un mode de réalisation de miroir atomique à deux dimensions comprenant deux autres paires de faisceaux lumineux issues d'une deuxième impulsion et adaptées pour défléchir spatialement un nuage d'atomes suivant une direction inclinée par rapport à la direction initiale ;
- la figure 5 représente l'évolution des niveaux de population entre un état atomique $|2,0,hK_y\rangle$ et les états atomiques $|1,0,0\rangle$, $|2,hK_x,0\rangle$ en fonction de l'aire des deux paires de faisceaux transverses de la figure 4 ;
- les figures 6A-6B-6C représentent schématiquement un interféromètre de Mach-Zehnder à deux dimensions selon un mode de réalisation, dans lequel la figure 6A représente une séparatrice atomique à deux dimensions, la figure 6B représente un miroir atomique à deux dimensions et la figure 6C représente un dispositif de recombinaison atomique à deux dimensions ;

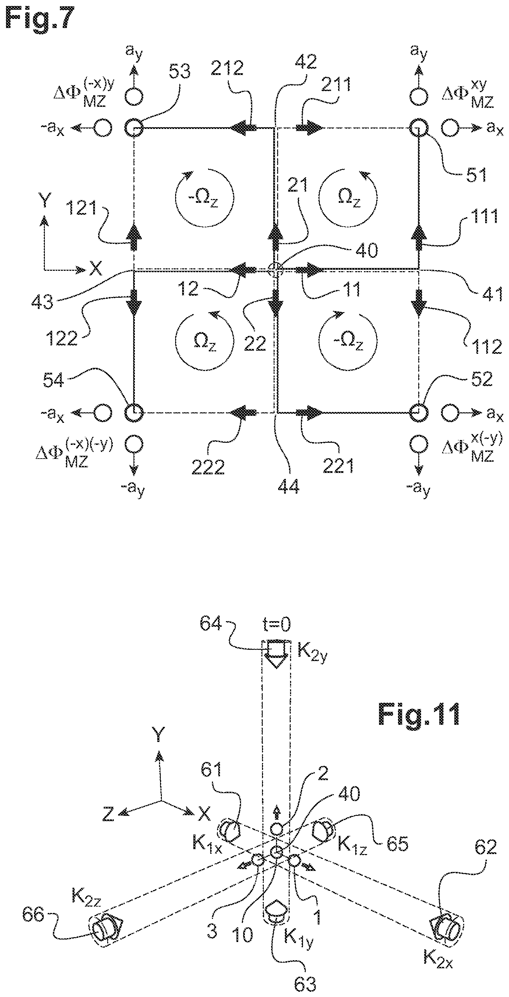

- la figure 7 représente un système simultané de quatre interféromètres de Mach-Zehnder à deux dimensions disposés symétriquement dans un même plan et utilisant une même source d'atomes froids ;

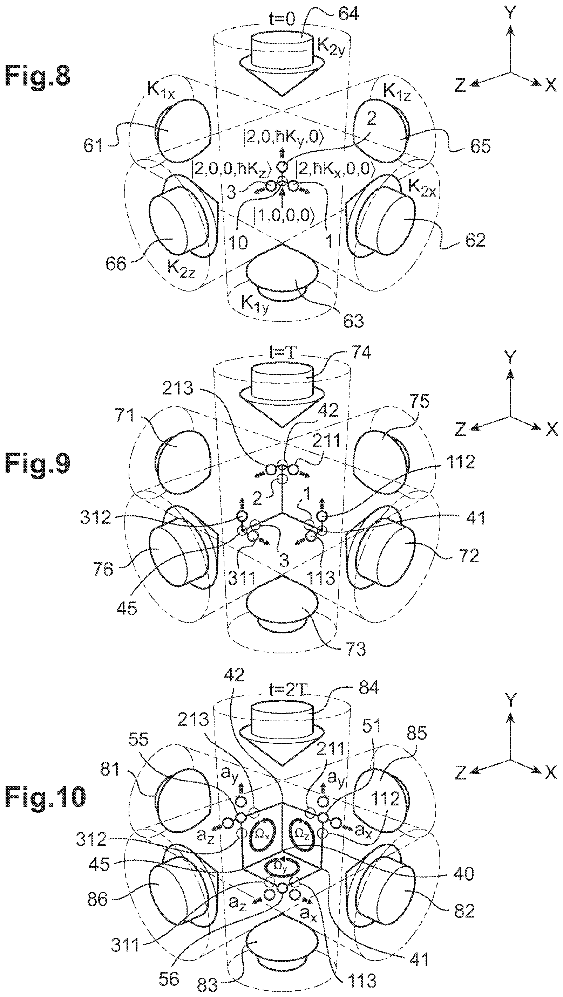

- les figures 8-10 représentent un mode de réalisation d'interféromètre de Mach-Zehnder à trois dimensions dans lequel la figure 8 représente une séparatrice atomique à trois dimensions, la figure 9 représente un miroir atomique à trois dimensions et la figure 10 représente un dispositif de recombinaison atomique à trois dimensions ;

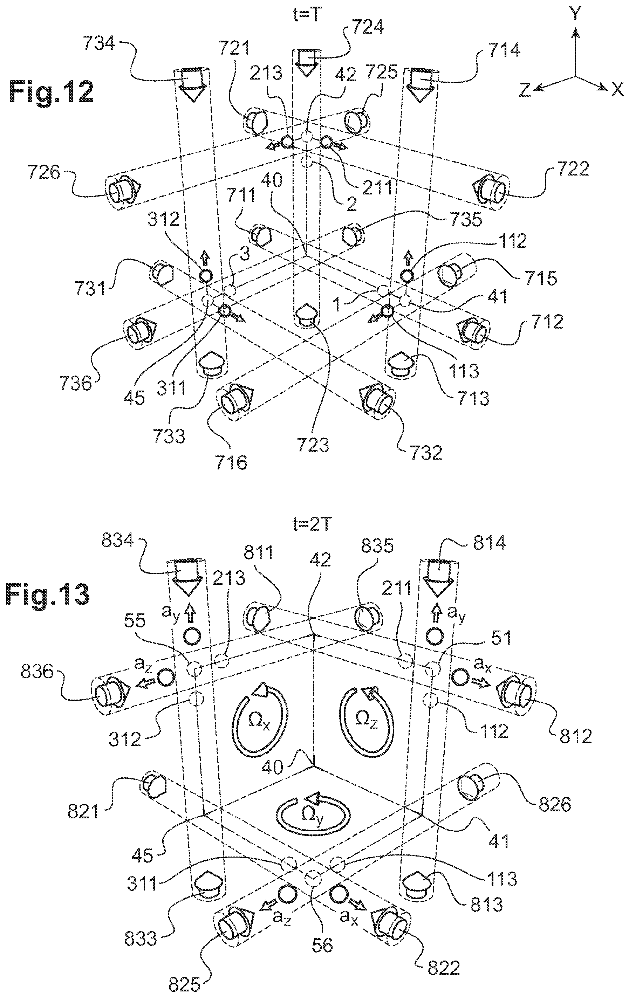

- les figures 11-13 représentent un autre mode de réalisation d'interféromètre de Mach-Zehnder à trois dimensions résolu spatialement, dans lequel la figure 11 représente une séparatrice atomique à trois dimensions, la figure 12 représente trois miroirs atomiques à trois dimensions et la figure 13 représente trois dispositifs de recombinaison atomique à deux dimensions.

Dispositif

La présente divulgation propose une nouvelle géométrie d'interféromètre atomique multidimensionnelle sensible aux accélérations et rotations suivant plusieurs directions de l'espace simultanément, en une seule mesure. Cette mesure comprend au moins deux composantes spatiales du vecteur accélération (à 2D ou 3D) et/ou du vecteur rotation (à 2D ou 3D).

Nous décrivons un nouveau modèle d'optique atomique à trois dimensions. Nous décrivons aussi les blocs de base de différents modes de réalisation d'interféromètres atomiques multidimensionnels, plus précisément à deux dimensions (2D) ou à trois dimensions (3D).

Dans le présent document, on entend par géométrie multidimensionnelle une géométrie dans laquelle au moins une impulsion lumineuse échange une quantité de mouvement avec des atomes le long de plus d'une direction à la fois. Une séquence d'impulsions lumineuses peut être utilisée pour séparer, défléchir spatialement et recombiner les atomes selon au moins deux axes. Cette géométrie multidimensionnelle permet une mesure inertielle multiaxe en un seul cycle. On entend par axe incliné par rapport à un autre axe, des axes non parallèles entre eux, l'angle d'inclinaison étant supérieur à 0 et inférieur ou égal à 90 degrés. De préférence, des axes inclinés l'un par rapport à l'autre sont orthogonaux.

Nous allons décrire plus précisément des exemples de blocs de base de différents modes de réalisation d'interféromètres atomiques à deux dimensions et à trois dimensions.

Les figures 1 à 6 représentent un exemple de blocs de base pour interféromètre atomique à deux dimensions selon un mode de réalisation. Les blocs de base sont constitués d'une séparatrice atomique, d'un miroir atomique et d'un dispositif de recombinaison atomique par analogie avec les composant d'un interféromètre optique de Mach-Zehnder.

Sur la figure 1, on a représenté une source 10 d'atomes froids dans un état atomique $|1,0,0\rangle$ aussi appelé état fondamental de ces atomes froids, noté état $|1\rangle$ sur la figure 2. Par source d'atomes froids, on entend ici un nuage d'atomes disposé en un point de l'espace de coordonnées (0, 0, 0) dans un repère orthonormé (X, Y, Z). Les atomes froids 10 sont par exemple des atomes de rubidium (Rb), césium (Cs), potassium (K) ou strontium (Sr). A un instant initial, les atomes froids 10 ont tous une même vitesse initiale et se propagent dans une même direction. Dans certains modes de réalisation, la vitesse initiale est nulle et dans d'autres non-nulle. On utilise une seule source 10 d'atomes froids.

On applique une impulsion lumineuse simultanément avec une première paire de faisceaux lumineux 61 et 62 suivant l'axe X et une autre première paire de faisceaux lumineux 63 et 64 suivant l'axe Y. Dans la suite du présent document, les première paire de faisceaux lumineux (61, 62), et autre première paire de faisceaux lumineux (63, 64) sont générées à partir d'une seule et même première impulsion laser. On entend par impulsions appliquées simultanément, des impulsions allumées en même temps et éteintes en même temps sur les différents axes. Les axes X et Y sont ici les axes d'un repère orthonormé XY, approximativement dans le plan de la figure 1. Les faisceaux lumineux 61 et 62 se propagent contrapropagativement suivant l'axe X et, respectivement, les faisceaux lumineux 63 et 64 se propagent contrapropagativement suivant l'axe Y, de manière à ce que les deux paires de faisceaux lumineux 61, 62 et 63, 64 soient incidents simultanément sur la source 10 d'atomes froids à un instant t initial. Autrement dit, les faisceaux lumineux 61 et 62 ont un vecteur d'onde parallèle à l'axe X et les faisceaux lumineux 63 et 64 ont un vecteur d'onde parallèle à l'axe Y. Les faisceaux lumineux 61, 62 et 63, 64 sont généralement des faisceaux laser.

Suivant l'axe X, le faisceau lumineux 61, respectivement 62, présente un vecteur d'onde $k1x$, respectivement $k2x$, et une fréquence optique $\omega1x$, respectivement $\omega2x$. Suivant l'axe Y, le faisceau lumineux 63, respectivement 64, présente un vecteur d'onde $k1y$, respectivement $k2y$, et une fréquence optique $\omega1y$, respectivement $\omega2y$. La paire de faisceaux lumineux 61, 62 excite une transition Raman à deux photons entre deux états atomiques internes séparés d'une fréquence $\omega1x - \omega2x \sim \omega^A_{21}$. Simultanément, la paire de faisceaux lumineux 63, 64 excite une transition Raman à deux photons entre deux états atomiques internes séparés d'une fréquence $\omega1y - \omega2y \sim \omega^A_{21}$.

Lors de ce processus, une quantité de mouvement $hKx = h(k1x - k2x) \sim 2hkx$, non nulle, est transférée à un premier nuage d'atomes 1 diffracté dans la direction X et une quantité de mouvement $hKy = h(k1y - k2y) \sim 2hky$, non nulle, est transférée à un deuxième nuage d'atomes 2 diffracté dans la direction Y, où h est la constante de Planck réduite. Autrement dit, la source 10 d'atomes froids initialement dans l'état stationnaire $|1,0,0\rangle$, dans le référentiel du front d'onde laser, est séparée de manière égale en un premier nuage d'atomes 1 ayant un état de mouvement $|2,hK_x,0\rangle$ suivant l'axe X et un deuxième nuage d'atomes 2 ayant un état de mouvement suivant $|2,0,hK_y\rangle$ suivant l'axe Y. De cette manière, les deux paires de faisceaux lumineux 61, 62 et 63, 64 couplent deux états de mouvement $|2,hK_x,0\rangle$ et $|2,0,hK_y\rangle$ à l'état stationnaire $|1,0,0\rangle$. Lorsque la différence $k1x - k2x$ est positive, la paire de faisceaux lumineux 61, 62 transfère une quantité de mouvement non nulle dans la direction +X et, simultanément, lorsque la différence k1y - k2y est positive, la paire de faisceaux lumineux 63, 64 transfère une quantité de mouvement dans la direction +Y. Inversement, lorsque la différence k1x - k2x est négative, la paire de faisceaux lumineux 61, 62 transfère une quantité de mouvement non nulle dans la direction -X et, simultanément, lorsque la différence k1y - k2y est négative, la paire de faisceaux lumineux 63, 64 transfère une quantité de mouvement dans la direction -Y. L'homme du métier en déduira aisément les combinaisons de mouvement suivant les directions +X et -Y ou respectivement -X et +Y, qui sont également possibles.

La figure 2 représente les niveaux d'énergie et de fréquence optique pour chaque faisceau lumineux 61, 62, 63, 64. Pour chaque paire de faisceaux lumineux, (61, 62) et (63, 64), les deux états internes $|1\rangle$ et $|2\rangle$ sont couplés à travers un état intermédiaire $|3\rangle$. Plus précisément, on note $\Delta x$ le désaccord entre $\omega 1x$ et la transition $\omega 13$ entre les états internes $|1\rangle$ et $|3\rangle$. On note $\Delta y$ le désaccord entre $\omega 1y$ et la transition $\omega 13$ entre les états internes $|1\rangle$ et $|3\rangle$. On choisit de préférence $\Delta y \neq \Delta x$ afin d'éviter l'excitation de résonances parasites, par exemple $\Delta x$=-1 GHz et $\Delta y$=-1.1 GHz.

On considère les états $|1,0,0\rangle$, $|2,hK_x,0\rangle$ et $|2,0,hK_y\rangle$ comme des états propres d'un système effectif à 3 niveaux : $|\Psi\rangle = C_0 |1,0,0\rangle + C_x |2,hKx,0\rangle + C_y |2,0,hKy\rangle$. La dynamique de ce processus de diffraction à deux dimensions (2D) peut être décrite comme une oscillation de quasi-Rabi entre les états de ce système, où le vecteur contenant les amplitudes respectives C = $(C_0, C_x, C_y)$ évolue selon l'équation (1) suivante :

$$ C(t) = exp \left[ -i \begin{pmatrix} 0 & X_x^* & X_y^* \\ X_x & -\delta_x & 0 \\ X_y & 0 & -\delta_y \end{pmatrix} t \right] C(0) \tag{1} $$

où $X_x$, respectivement $X_y$, représente la fréquence de Rabi à deux photons pour l'axe X, respectivement pour l'axe Y, et $\delta_x = \omega_{1x} - \omega_{2x} - \omega^A_{21} - \Delta\omega^D_x - \Delta\omega^R_x$ représente le désaccord de la transition à deux photons de la paire de faisceaux (61, 62), respectivement, $\delta_y = \omega_{1y} - \omega_{2y} - \omega^A_{21} - \Delta\omega^D_y - \Delta\omega^R_y$ pour la paire de faisceaux (63, 64). Nous soulignons que les transitions induites par chaque paire de faisceaux sont sélectives en vitesse, notée v, comme indiqué par la présence du désaccord Doppler $\Delta\omega^D_x = K_x v$ et de la fréquence associée au recul $\Delta\omega^R_x = h K^2_x/2m$ dans l'expression de $\delta_x$ et respectivement du désaccord Doppler $\Delta\omega^D_y = K_y v$ et de la fréquence associée au recul $\Delta\omega^R_y = h K^2_y/2m$ dans l'expression de $\delta_y$.

Dans le cas où $\delta_x = \delta_y = \delta$, la fréquence de Rabi effective pour diffraction en deux dimensions, $\Omega_{Rabi}$ prend une forme analytique simple :

$$ \Omega_{Rabi} = \frac{1}{2}\sqrt{\delta^2 + 4(|\chi_x|^2 + |\chi_y|^2)} \tag{2} $$

La figure 3 représente, en fonction de la durée ou de l'aire des impulsions, les oscillations de Rabi entre l'état fondamental $|1\rangle$ et les deux états $|2,hK_x,0\rangle$ et $|2,0,hK_y\rangle$, où h est la constante de Planck réduite dans le cas où $\delta x=\delta y$. Dans ce cas, les courbes des deux états $|2,hK_x,0\rangle$ et $|2,0,hK_y\rangle$ se superposent parfaitement.

Ces oscillations de Rabi induisent un transfert de population entre l'état stationnaire et les états en mouvement pour une source d'atomes initialement au repos dans l'état $|1,0,0\rangle$. On obtient une séparatrice atomique à 2D à une durée $\tau$ correspondant à une impulsion lumineuse ayant une aire égale à : $\Omega_{Rabi}.\tau = \pi/2$. Dans ce cas, la population atomique est transférée de manière égale vers les deux états en mouvement $|2,hK_x,0\rangle$ et $|2,0,hK_y\rangle$.

Contrairement au cas d'une séparatrice atomique opérant par diffraction simple à une dimension (1D), où une superposition d'intensité égale (ou 50-50) des états initiaux et finaux est généralement souhaitée, il ne reste ici aucune population d'atomes dans l'état initial. Une séparatrice atomique 1D à simple diffraction (selon l'art antérieur) transfère une quantité de moment via deux photons dans une seule direction et les atomes changent d'états internes (e.g. |1,0,0> devient |2,+hKx,0>). Une séparatrice atomique 1D à double diffraction (selon l'art antérieur) implique un transfert de mouvement symétrique à quatre photons dans une seule direction et les atomes restent dans le même état interne (e.g. |1,0,0> devient |1,+hKx,0> + |1,-hKx,0>).

Selon la présente divulgation, une séparatrice atomique 2D à simple diffraction implique un transfert de mouvement total à quatre photons, (ou deux transferts selon deux directions, e.g. |1,0,0> devient |2,+hKx,0> + |2,0,+hKy>), cependant les atomes changent d'états internes. A la différence d'une séparatrice atomique 1D, avec une séparatrice atomique 2D, les atomes sont divisés en deux états qui se déplacent dans des directions spatiales différentes. Sur la figure 3, la population atomique est transférée par simple diffraction 2D, où une quantité de mouvement qui correspond à deux photons est transférée selon les directions X et Y simultanément.

La présente divulgation propose en outre une séparatrice 2D à double diffraction, qui implique un transfert de mouvement symétrique à huit photons, (2 selon 4 directions, e.g. |1,0,0> devient |2,+hKx,0> + |2,0,+hKy> + |2,-hKx,0> + |2,0,-hKy>).

Sur la figure 4, on a représenté le deuxième nuage d'atomes 2 se propageant le long de la direction Y dans l'état |2,0,hK$_y\rangle$). On applique simultanément une deuxième paire de faisceaux lumineux 71 et 72 suivant l'axe X et une autre deuxième paire de faisceaux lumineux 73 et 74 suivant l'axe Y. Les deuxième paire de faisceaux lumineux (71, 72) et autre deuxième paire de faisceaux lumineux (73, 74) sont issues d'une seule et même deuxième impulsion lumineuse. Les faisceaux lumineux 71 et 72 se propagent contrapropagativement suivant l'axe X et, respectivement, les faisceaux lumineux 73 et 74 se propagent contrapropagativement suivant l'axe Y, de manière à ce que les deuxièmes paires de faisceaux lumineux (71, 72) et (73, 74) soient incidentes simultanément sur le deuxième nuage d'atomes 2 au point 42 de l'espace. Autrement dit, les faisceaux lumineux 71 et 72 ont un vecteur d'onde K$_x$ parallèle à l'axe X et les faisceaux lumineux 73 et 74 ont un vecteur d'onde K$_y$ parallèle à l'axe Y. Lors de ce processus, une quantité de mouvement hK$_y$, non nulle, est transférée au premier nuage d'atomes 1 diffracté dans la direction Y et une quantité de mouvement hK$_x$, non nulle, est transférée au deuxième nuage d'atomes 2 diffracté dans la direction X.

On forme ainsi un miroir atomique 2D à simple diffraction. Ce miroir atomique 2D à simple diffraction arrête le mouvement des atomes dans une direction et leur impulse un mouvement dans une autre direction. Par exemple, sur la figure 4, le miroir atomique 2D transfère simultanément à l'état initial |2,0,+hKy> une quantité de mouvement -hKy et +hKx, ce qui donne l'état final |2,+hKx,0>.

Au contraire, un miroir atomique de diffraction simple 1D selon l'art antérieur transmet une quantité de mouvement dans une seule direction.

La figure 5 montre les oscillations de Rabi pour deux paires de faisceaux lumineux formant l'équivalent d'un miroir atomique à 2D, où le nuage d'atomes 2 initialement dans l'état |2,0,hK$_y\rangle$ est transféré intégralement, par simple diffraction 2D, dans l'état |2,hK$_x$,0$\rangle$ pour une impulsion de durée 2$\tau$, autrement dit pour une deuxième impulsion lumineuse ayant une aire égale à $\pi$. Dans ces conditions, sur la figure 4, le nuage d'atomes 2 est défléchi dans la direction X. Nous soulignons que ce transfert de population s'effectue à travers l'état stationnaire |1,0,0$\rangle$ qui oscille à deux fois la fréquence des états en mouvement.

De manière analogue, en appliquant les deux paires de faisceaux lumineux (71, 72) et (73, 74) au premier nuage d'atomes 1 se propageant dans la direction X, pour une durée d'impulsion égale à 2$\tau$, autrement dit pour une deuxième impulsion lumineuse ayant une aire égale à $\pi$, le premier nuage d'atomes 1 dans l'état |2,hK$_x$,0$\rangle$ est transféré intégralement, par simple diffraction 2D, dans l'état |2,0,$\hbar$K$_y\rangle$. Autrement dit, le premier nuage d'atomes 1 est défléchi dans la direction Y.

L'ensemble des deuxième paire de faisceaux lumineux (71, 72) et autre deuxième paire de faisceaux lumineux (73, 74) forme ainsi un miroir atomique à deux dimensions.

Par symétrie avec la séparatrice atomique à 2D, décrite en lien avec les figures 1 à 3, à partir d'un premier nuage d'atomes 1 dans l'état |2,0,$\hbar$K$_y\rangle$ et d'un deuxième nuage d'atomes 2 dans l'état |2,$\hbar$K$_x$,0$\rangle$ se dirigeant vers un même point de l'espace, l'application de l'ensemble de deux autres paires de faisceaux (81,82) et (83,84) suivant les axes X et Y en ce point de l'espace, ces troisième paire de faisceaux lumineux (81,82) et autre troisième paire de faisceaux lumineux (83,84) étant issues d'une seule et même troisième impulsion lumineuse de durée égale à $\tau$, autrement dit ayant une aire égale à $\pi$/2, forme un dispositif de recombinaison atomique (voir figure 6C). Lors de ce processus, une quantité de mouvement -$\hbar$K$_y$, non nulle, est transférée au premier nuage d'atomes 1 et une quantité de mouvement -$\hbar$K$_x$, non nulle, est transférée au deuxième nuage d'atomes 2. En fonction de la phase de l'interféromètre, une partie des atomes est transférée, par simple diffraction 2D, dans l'état fondamental |1,0,0$\rangle$ et/ou dans l'état |2,$\hbar$K$_x$,0$\rangle$, respectivement |2,0,$\hbar$K$_y\rangle$. Plus précisément, lorsque la différence de phase de l'interféromètre est égale à un multiple impair de $\pi$, les deux nuages d'atomes 1 et 2 sont intégralement déviés dans les deux directions X et Y à parts égales. Lorsque la différence de phase de l'interféromètre est égale à un multiple impair de $\pi$/2, les deux nuages d'atomes 1 et 2 sont intégralement transférés dans l'état fondamental stationnaire. Lorsque la différence de phase de l'interféromètre est non nulle, une partie du premier nuage d'atomes 1 est déviée également dans les deux directions X et Y, l'autre partie du premier nuage d'atomes est transférée dans l'état fondamental stationnaire et, simultanément, une partie du deuxième nuage d'atomes 2 est déviée également dans les deux directions X et Y, l'autre partie du deuxième nuage d'atomes est transférée dans l'état fondamental stationnaire.

Un élément important de tout dispositif d'optique atomique est le transfert d'une phase « classique » aux atomes. Dans le cas d'un interféromètre atomique à lumière pulsée, il s'agit de la différence de phase entre les faisceaux d'excitation. Pour préciser le rôle de ces phases dans le cas de l'optique atomique 2D, nous considérons le cas de paires de faisceaux à résonance ($\delta$x = $\delta$y = 0) et ayant des fréquences de Rabi identiques. L'effet des séparatrices et miroirs 2D peuvent être alors résumé come suit. On note $\phi_x$, respectivement $\phi_y$, la différence de phase optique entre les faisceaux Raman contra-propageant selon l'axe X, respectivement Y. L'effet d'une séparatrice atomique à 2D, ou d'un dispositif de recombinaison atomique à 2D, est d'imprimer une différence de phase $\pm\phi_x$, respectivement $\pm\phi_y$, aux atomes initialement dans l'état stationnaire et transférés dans un état en mouvement selon la direction $\pm$X, respectivement $\pm$Y et vice versa. L'effet d'un miroir atomique 2D est d'imprimer une différence de phase $\pm(\phi_x - \phi_y)$ sur les atomes qui effectuent une transition entre deux états en mouvement |2,hK$_x$,0$\rangle$ et |2,hK$_y$,0$\rangle$.

Les blocs de base décrits ci-dessus, séparatrice atomique, miroir atomique et dispositif de recombinaison atomique, permettent de construire un interféromètre atomique de Mach-Zehnder à deux dimensions.

Selon un mode de réalisation, l'interféromètre de Mach-Zehnder à deux dimensions comporte une séquence de trois impulsions lumineuses de durées respectives $\tau$, $2\tau$ et $\tau$, séparées par un temps d'interrogation T. La première impulsion forme une séparatrice atomique, la deuxième impulsion forme un miroir atomique et la troisième impulsion forme un dispositif de recombinaison atomique. Le produit matriciel suivant donne une représentation simple de ce processus :

$$M_{MZ} = M_3(\tau)U_{free}(T)M_2(2\tau)U_{free}(T)M_1(\tau) \tag{3}$$

où $U_{free}(T)$ est une matrice unitaire décrivant l'évolution libre pendant le temps T entre les impulsions lumineuses consécutives d'une même séquence.

Pour un nuage d'atomes initialement au repos qui acquiert la phase $\phi_{x,n}$ ou $\phi_{y,n}$ durant la n[ième] impulsion, où n=1, 2 ou 3, les populations sont données par l'équation (4) suivante :

$$\begin{pmatrix} |C_0|^2 \\ |C_x|^2 \\ |C_y|^2 \end{pmatrix} = \begin{pmatrix} \frac{1}{2}\left(1 + \cos\Delta\Phi\right) \\ \frac{1}{4}\left(1 - \cos\Delta\Phi\right) \\ \frac{1}{4}\left(1 - \cos\Delta\Phi\right) \end{pmatrix} \tag{4}$$

où $\Delta\Phi$ représente la différence de phase complète de l'interféromètre, définie comme suit à deux dimensions $\Delta\Phi = (\phi_{x,1} - 2\phi_{x,2} + \phi_{x,3}) - (\phi_{y,1} - 2\phi_{y,2} + \phi_{y,3})$.

L'équation (4) indique que l'interféromètre possède deux ports de sortie complémentaires : un port où la population est dans l'état stationnaire $|\langle 1|M_{MZ}|1,0,0\rangle|^2 = \frac{1}{2}(1+\cos\Delta\Phi)$ et un autre port avec la somme des populations dans les états en mouvement $|\langle 2|M_{MZ}|1,0,0\rangle|^2 = \frac{1}{2}(1-\cos\Delta\Phi)$. Ces deux ports sont séparés spatialement et correspondent à différents états internes. Un des ports de sortie correspond à l'état stationnaire et l'autre port de sortie correspond à la somme des nuages se déplaçant en X ou en Y. Les deux ports de sortie de l'interféromètre atomique de Mach-Zehnder à 2D peuvent être mesurés séparément au moyen d'un système d'imagerie résolu spatialement. De manière alternative, ils peuvent être mesurés au moyen d'un seul photodétecteur en envoyant une lumière résonante sélectivement avec un port mais pas avec l'autre et en intégrant sur l'espace. Ces deux méthodes sont réalisables avec des nuages d'atomes thermiques.

La figure 6 représente schématiquement un interféromètre de Mach-Zehnder à deux dimensions selon un mode de réalisation. Ici aussi, on utilise une seule source 10 d'atomes froids.

Plus précisément, la figure 6A représente une séparatrice atomique à deux dimensions à un instant t=0, analogue à la figure 1. Une première paire de faisceaux lumineux contrapropagatifs (61, 62) suivant l'axe X et une autre première paire de faisceaux lumineux contrapropagatifs (63, 64) suivant l'axe Y sont appliquées simultanément à la source 10 d'atomes froids. La première impulsion divisée en des faisceaux (61, 62) et (63, 64) a une durée $\tau$ adaptée pour diviser spatialement la source 10 d'atomes froids en un premier nuage d'atomes 1 se propageant suivant une première trajectoire le long de l'axe X et un deuxième nuage d'atomes 2 se propageant suivant une deuxième trajectoire le long de l'axe Y. Juste après la première impulsion lumineuse, tous les atomes froids la source 10, qui étaient initialement dans l'état fondamental sont déviés par simple diffraction 2D soit dans la direction X pour former le premier nuage d'atomes 1 soit dans la direction Y pour former le deuxième nuage d'atomes 2. Comme dans le mode de réalisation décrit en lien avec la figure 1, après la première impulsion, il ne reste ici aucune population d'atomes dans l'état initial ou fondamental.

La figure 6B représente un miroir atomique à deux dimensions, à un instant t=T. Une deuxième paire de faisceaux lumineux contrapropagatifs (71, 72) suivant l'axe X et une autre deuxième paire de faisceaux lumineux contrapropagatifs (73, 74) suivant l'axe Y sont appliquées simultanément au premier nuage d'atomes 1 se propageant le long de l'axe X et au deuxième nuage d'atomes 2 se propageant le long de l'axe Y. Les faisceaux lumineux sont ici suffisamment étendus spatialement pour couvrir simultanément le premier nuage d'atomes 1 et le deuxième nuage d'atomes 2. Les deuxième paire de faisceaux lumineux contrapropagatifs (71, 72) et autre deuxième paire de faisceaux lumineux contrapropagatifs (73, 74) sont issues d'une seule et même deuxième impulsion lumineuse ayant une durée $2\tau$. Ainsi, le premier nuage d'atomes 1 est réfléchi, par simple diffraction 2D, suivant la direction Y au point 41 et, simultanément, le deuxième nuage d'atomes 2 est réfléchi, par simple diffraction 2D, suivant la direction X au point 42.

La figure 6C représente un dispositif de recombinaison atomique à deux dimensions, à un instant t=2T. Une troisième paire de faisceaux lumineux contrapropagatifs (81, 82) suivant l'axe X et une autre troisième paire de faisceaux lumineux contrapropagatifs (83, 84) suivant l'axe Y sont appliquées simultanément au premier nuage d'atomes 1 se propageant le long de l'axe Y et au deuxième nuage d'atomes 2 se propageant le long de l'axe X. Les troisièmes paires de faisceaux lumineux contrapropagatifs (81, 82) et (83, 84) sont issues d'une seule et même troisième impulsion lumineuse ayant une durée τ. Ainsi, le premier nuage d'atomes 1 et le deuxième nuage d'atomes 2 se recombinent au point 51 de l'espace.

Les deux bras de l'interféromètre atomique de Mach-Zehnder à 2D ainsi formé entourent une aire rectangulaire dans le plan XY. Cette géométrie est sensible à une rotation autour de l'axe Z perpendiculaire au plan XY. De plus, projetés sur les plans spatio-temporels xt et yt, ces chemins entourent la même aire spatio-temporelle qu'un interféromètre de Mach-Zehnder à 1D, donnant ainsi une sensibilité aux composantes d'accélération $a_x$ suivant l'axe X et $a_y$ suivant l'axe Y.

Plus généralement, les trajectoires atomiques encerclent à la fois une aire spatiale et une aire spatio-temporelle. Un tel interféromètre atomique de Mach-Zehnder à 2D est sensible à la fois aux accélérations, $a_x$ suivant l'axe X, et $a_y$ suivant l'axe Y et à une rotation $\Omega_z$ autour de l'axe Z. Cette géométrie d'interféromètre atomique de Mach-Zehnder à 2D combine un accéléromètre et un gyroscope.

La dynamique résultant de l'interférence entre deux trajectoires atomiques à 2D est encodée dans la différence de phase $\Delta\Phi$ de cet interféromètre. Nous calculons cette différence de phase pour la géométrie Mach-Zehnder 2D en se basant sur le formalisme ABCD$\xi$ développé par Bordé et Antoine. Ce traitement donne une solution exacte d'un paquet d'onde atomique en présence d'un Hamiltonien externe dépendant du temps au plus quadratique en position et quantité de mouvement. Ce type d'Hamiltonien contient toute la physique importante pour les applications d'interférométrie atomique (accélérations, rotations et gradients de gravité). Brièvement, $\Delta\Phi$ peut être écrit comme :

$$\Delta\Phi = \sum_{i=1}^{N}(K_i^U - K_i^L) \cdot Q_i + \phi_i^U - \phi_i^L$$

$$(5)$$

où $K_i^U$ et $K_i^L$ sont des vecteurs d'onde effectifs correspondant au transfert par les impulsions lumineuses de quantité de mouvement selon les chemins haut (U) et bas (L) respectivement, et $Q_i \equiv \frac{1}{2}(q^U(t_i) + q^L(t_i))$ est la position sur la trajectoire moyenne durant la i$^{ème}$ impulsion à l'instant t = $t_i$. $\phi_i^U$ et $\phi_i^L$ sont les phases optiques contrôlables des lasers. L'équation (5) établit que la phase interférométrique est uniquement déterminée par la phase imprimée sur les atomes par les impulsions lumineuses le long de la trajectoire moyenne aux instants $t_1$, $t_2$, ..., $t_N$. Cette relation est vérifiée expérimentalement à un haut degré de précision. La trajectoire atomique, en position et en vitesse, décrite par les vecteurs q et p, est calculée en résolvant les équations classiques du mouvement.

Dans le cas d'un interféromètre MZ à une dimension, le déphasage total s'exprime comme suit :

$$\Delta\Phi_{x,0} = K_x\big(a_x + 2\,v_y\,\Omega_z - 2\,v_z\,\Omega_y\big)T \qquad (6)$$

Ce déphasage bien connu d'un interféromètre MZ à 1D est proportionnel à la somme de l'accélération externe, $a_x$, et l'accélération Coriolis, $(2v \times \Omega)_x$, selon l'axe X.

Dans le cas d'un interféromètre MZ à deux dimensions, le déphasage total s'exprime comme suit :

$$\Delta\Phi_{x,y}$$

$$= K_x\big(a_x + 2\,v_y\,\Omega_z - 2\,v_z\,\Omega_y\big)T^2 - K_y\big(a_y + 2\,v_x\,\Omega_z - 2\,v_z\,\Omega_x\big)T^2 + 2\frac{\hbar}{m}K_x\,K_y\,\Omega_z\,T^2$$

$$(7)$$

On observe que le déphasage de l'interféromètre à 2D de la présente divulgation est proportionnel non seulement à l'accélération totale selon l'axe X, qui comprend l'accélération externe, $a_x$, l'accélération Coriolis, $(2v \times \Omega)_x$, et mais en outre proportionnel à l'accélération totale selon l'axe Y et à la vitesse de rotation $\Omega_z$ autour de l'axe Z. La phase associée à la rotation autour de l'axe Z prend la forme habituelle $\Delta K (2v \times \Omega)T^2$, où v est ici la vitesse de recul définie par la formule $h(K_1^U + K_1^L)/2m$. La vitesse de recul correspond au correspond au recul pris par un atome lorsqu'il absorbe un photon $k_1^U$ et émet un photon $k_1^L$. Contrairement aux gyroscopes atomiques de l'art antérieur, aucune vitesse initiale n'est ici requise pour obtenir une sensibilité à la rotation $\Omega_z$. Cet aspect est particulièrement avantageux, car il est alors possible de changer la direction de la vitesse v en inversant $K_1^U$ et $K_1^L$, de manière à supprimer les déphasages accélérométriques parasites qui représentent une des principales sources d'erreur systématique dans les gyroscopes atomiques.

La figure 7 représente un système de quatre interféromètres de Mach-Zehnder à deux dimensions formés symétriquement dans un même plan et utilisant une même source d'atomes froids. Dans ce mode de réalisation, des impulsions lumineuses de quadruple-diffraction (ou double-diffraction en deux dimensions) sont utilisées pour transférer simultanément une quantité de mouvement ±hK selon chaque axe X et Y. Plus précisément, une source 10 d'atomes froids est initialement située au point 40. Une première impulsion sépare, par double diffraction 2D, la source 10 d'atomes froids en quatre nuages d'atomes : un premier nuage d'atomes 11 se propageant le long de l'axe X avec un vecteur d'onde $+K_x$, un deuxième nuage d'atomes 12 se propageant le long de l'axe X avec un vecteur d'onde $-K_x$, un troisième nuage d'atomes se propageant le long de l'axe Y avec un vecteur d'onde $+K_y$ et un quatrième nuage d'atomes se propageant le long de l'axe Y avec un vecteur d'onde $-K_y$ Au bout d'une durée T, le premier nuage d'atomes se trouve au point 41, le deuxième nuage d'atomes se trouve au point 43, le troisième nuage d'atomes se trouve au point 42 et le quatrième nuage d'atomes se trouve au point 44. Comme dans les modes de réalisation décrits en lien avec les figures 1 et 4, après la première impulsion, il ne reste aucune population d'atomes dans l'état initial ou fondamental.

A l'instant t=T, on applique une deuxième impulsion lumineuse simultanément aux points 41, 42, 43 et 44. Plus précisément, la deuxième impulsion utilise une combinaison de simple diffraction en deux dimensions et l'effet de double diffraction en deux dimensions. Ainsi, le premier nuage d'atomes 11 est diffracté au point 41 respectivement en un paquet d'atomes 111 se propageant suivant l'axe Y avec un vecteur d'onde $+K_y$ et un autre paquet d'atomes 112 se propageant suivant l'axe Y avec un vecteur d'onde $-K_y$. De manière analogue, le deuxième nuage d'atomes 12 est diffracté au point 43 respectivement en un paquet d'atomes 121 se propageant suivant l'axe Y avec un vecteur d'onde $+K_y$ et un autre paquet d'atomes 122 se propageant suivant l'axe Y avec un vecteur d'onde $-K_y$. Le troisième nuage d'atomes 21 est diffracté au point 42 respectivement en un paquet d'atomes 211 se propageant suivant l'axe X avec un vecteur d'onde $+K_x$ et un autre paquet d'atomes 212 se propageant suivant l'axe X avec un vecteur d'onde $-K_x$. Et, le quatrième nuage d'atomes 22 est diffracté au point 44 respectivement en un paquet d'atomes 221 se propageant suivant l'axe X avec un vecteur d'onde $+K_x$ et un autre paquet d'atomes 222 se propageant suivant l'axe X avec un vecteur d'onde $-K_x$.

A l'instant t=2T, on applique une troisième impulsion lumineuse simultanément aux points 51, 52, 53 et 54 situés aux extrémités du grand carré de la figure 7. Plus précisément, la troisième impulsion utilise la simple diffraction en deux dimensions. Ainsi, le paquet d'atomes 111 et le paquet d'atomes 211 se recombinent au point 51 pour former un premier interféromètre de Mach-Zehnder dans le plan XY ou interféromètre « xy » mesurant un déphasage $\Delta\Phi_{x,y}$. Le paquet d'atomes 112 et le paquet d'atomes 221 se recombinent au point 52 pour former un deuxième interféromètre de Mach-Zehnder dans le plan XY ou interféromètre « x,-y » mesurant un déphasage $\Delta\Phi_{x,-y}$. Le paquet d'atomes 212 et le paquet d'atomes 121 se recombinent au point 53 pour former un troisième interféromètre de Mach-Zehnder à 2D dans le plan XY ou interféromètre « -x,y » mesurant un déphasage $\Delta\Phi_{-x,y}$. Le paquet d'atomes 122 et le paquet d'atomes 222 se recombinent au point 54 pour former un quatrième interféromètre de Mach-Zehnder à 2D dans le plan XY ou interféromètre « -x,-y », mesurant un déphasage $\Delta\Phi_{-x,-y}$.

Bien que la phase de chacun de ces interféromètres de Mach-Zehnder à 2D soit un mélange de trois mesures inertielles ($a_x$, $a_y$ et $\Omega_z$), il est possible d'isoler chacune de ces mesures inertielles en utilisant les combinaisons linéaires des phases obtenues pour chaque interféromètre d'aires inversées. On démontre les relations dans la table suivantes.

| $\Delta\Phi_{x,y}$ | $\Delta\Phi_{x,-y}$ | $\Delta\Phi_{-x,y}$ | $\Delta\Phi_{-x,-y}$ | Somme |
|---|---|---|---|---|
| + | - | - | + | $4K_x a_x^{tot} T^2$ |
| - | - | + | + | $4K_y a_y^{tot} T^2$ |
| + | - | + | - | $8\,(\hbar/m)\,K_x K_y \Omega_z T^2$ |

Les combinaisons linéaires des différentes phases interférométriques à 2D donnent ainsi accès aux trois composantes inertielles $a_x^{tot}$, $a_y^{tot}$ et $\Omega_z$ avec un facteur d'échelle augmenté par un facteur quatre. Autrement dit, la sensibilité aux effets inertiels de cette configuration est augmentée d'un facteur quatre par rapport à un seul interféromètre à deux dimensions.

Ces déphasages peuvent être obtenus grâce à des mesures séquentielles en utilisant des interféromètres d'aires inversées, ou en un seul cycle de mesure utilisant l'effet de double diffraction comme discuté ci-dessus. Cette dernière configuration est idéale pour les applications de navigation inertielle, où des variations rapides de rotation et d'accélération sont possibles.

En résumé, la figure 7 présente un schéma dans lequel quatre interféromètres d'aires relatives inversées sont générés à partir d'une seule source atomique, permettant la mesure simultanée de trois composantes inertielles $a_x^{tot}$, $a_y^{tot}$ et $\Omega_z$. De plus, la moitié de chaque bras de l'interféromètre est partagée entre deux interféromètres voisins, ce qui permet de rejeter des erreurs systématiques comme par exemple le décalage à un photon.

Nous avons divulgué ci-dessus différents modes de réalisation d'interféromètre atomique MZ à 2D.

La présente divulgation propose d'étendre la méthode décrite ci-dessus à une géométrie en 3D en appliquant des faisceaux laser simultanés suivant 3 axes orthogonaux pour générer trois interféromètres à 2D dans des plans orthogonaux, comme présenté sur les figures 8 à 10. Ici aussi, on utilise une seule source 10 d'atomes froids.

Plus précisément, sur la figure 8, à un instant initial t=0, une source 10 d'atomes froids se trouve en un point 40 de l'espace dans un repère orthonormé XYZ. Sur la figure 8, à l'instant t=0, une première impulsion lumineuse est divisée en trois paires de faisceaux lumineux orthogonaux (61, 62) suivant l'axe X, (63, 64) suivant l'axe Y et (65, 66) suivant l'axe Z, ces trois paires de faisceaux lumineux étant adaptées pour former une séparatrice à 3D. L'aire de cette première impulsion lumineuse est égale à $\pi/2$. Cette première impulsion lumineuse sépare, par simple diffraction 3D, les atomes 10 initialement dans l'état stationnaire $|1,0,0,0\rangle$ en trois parties égales formant trois nuages d'atomes : un premier nuage d'atomes 1 se propageant le long de l'axe X dans un état $|2,hK_x,0,0\rangle$, un deuxième nuage d'atomes 2 se propageant le long de l'axe Y dans un état $|2,0,hK_y,0\rangle$ et un troisième nuage d'atomes 3 se propageant le long de l'axe Z dans un état $|2,0,0,hK_z\rangle$ jusqu'à l'instant t=T. Lors de ce processus, une quantité de mouvement $hK_x$, non nulle, est transférée au premier nuage d'atomes 1 diffracté dans la direction X, une quantité de mouvement $hK_y$, non nulle, est transférée au deuxième nuage d'atomes 2 diffracté dans la direction Y et une quantité de mouvement $hK_z$, non nulle, est transférée au troisième nuage d'atomes 3 diffracté dans la direction Z. Comme dans les modes de réalisation à 2D, après la première impulsion, il ne reste aucune population d'atomes dans l'état initial ou fondamental. Sur la figure 9, à l'instant t=T, une deuxième impulsion lumineuse est divisée aussi en trois paires de faisceaux lumineux orthogonaux (71, 72) suivant l'axe X, (73, 74) suivant l'axe Y et (75, 76) suivant l'axe Z, ces trois paires de faisceaux lumineux étant adaptées pour former un miroir à 3D. L'aire de cette deuxième impulsion lumineuse est égale à $\pi$. Cette deuxième impulsion lumineuse réfléchit, par simple diffraction 3D, chaque état le long des deux directions orthogonales à la vitesse incidente. Au point 41, la deuxième impulsion lumineuse sépare le premier nuage d'atomes 1 dans l'état $|2,hK_x,0,0\rangle$ en un paquet d'atomes 112 se propageant suivant l'axe Y et un autre paquet d'atomes 113 se propageant suivant l'axe Z. Au point 42, la deuxième impulsion lumineuse sépare le deuxième nuage d'atomes 2 dans l'état $|2,0,hK_y,0\rangle$ en un paquet d'atomes 211 se propageant suivant l'axe X et un autre paquet d'atomes 213 se propageant suivant l'axe Z. Au point 45, la deuxième impulsion lumineuse sépare le troisième nuage d'atomes 3 dans l'état $|2,0,0,hK_z\rangle$ en un paquet d'atomes 311 se propageant suivant l'axe X et un autre paquet d'atomes 312 se propageant suivant l'axe Y. Lors de ce processus, une quantité de mouvement $hK_y$, non nulle, est transférée au paquet d'atomes 112 diffracté dans la direction Y et une quantité de mouvement $hK_z$, non nulle, est transférée à l'autre paquet d'atomes 113 diffracté dans la direction Z. Simultanément, une quantité de mouvement $hK_x$, non nulle, est transférée au paquet d'atomes 211 diffracté dans la direction X et une quantité de mouvement $hK_z$, non nulle, est transférée à l'autre paquet d'atomes 213 diffracté dans la direction Z. Simultanément encore, une quantité de mouvement $hK_x$, non nulle, est transférée au paquet d'atomes 311 diffracté dans la direction X et une quantité de mouvement $hK_y$, non nulle, est transférée à l'autre paquet d'atomes 312 diffracté dans la direction Y.

Sur la figure 10, à l'instant t=2T, une troisième impulsion lumineuse est aussi divisée en trois paires de faisceaux lumineux orthogonaux (81, 82) suivant l'axe X, (83, 84) suivant l'axe Y et (85, 86) suivant l'axe Z, ces trois paires de faisceaux lumineux étant adaptées pour former un dispositif de recombinaison à 3D. L'aire de cette troisième impulsion lumineuse est égale à $\pi/2$. Au point 51, la troisième impulsion lumineuse recombine, par simple diffraction 3D, le paquet d'atomes 211 se propageant le long de l'axe X et le paquet d'atomes 112 se propageant le long de l'axe Y pour former un premier interféromètre de MZ à 2D dans le plan XY, sensible à trois mesures inertielles ($a_x$, $a_y$ et $\Omega_z$). Au point 56, la troisième impulsion lumineuse recombine le paquet d'atomes 311 se propageant le long de l'axe X et le paquet d'atomes 113 se propageant le long de l'axe Z pour former un deuxième interféromètre de MZ à 2D dans le plan XZ, sensible à trois mesures inertielles ($a_x$, $a_z$ et $\Omega_y$). Au point 55, la troisième impulsion lumineuse recombine le paquet d'atomes 312 se propageant le long de l'axe Y et le paquet d'atomes 213 se propageant le long de l'axe Z pour former un troisième interféromètre de MZ à 2D dans le plan XZ, sensible à trois mesures inertielles ($a_y$, $a_z$ et $\Omega_x$). Un mode de réalisation consiste à détecter trois signaux résolus spatialement aux trois coins du cube 51, 55, 56. Lors de ce processus, une quantité de mouvement $-hK_y$, non nulle, est transférée au paquet d'atomes 112 et une quantité de mouvement $-hK_z$, non nulle, est transférée à l'autre paquet d'atomes 113. Simultanément, une quantité de mouvement $-hK_x$, non nulle, est transférée au paquet d'atomes 211 et une quantité de mouvement $-hK_z$, non nulle, est transférée à l'autre paquet d'atomes 213. Simultanément encore, une quantité de mouvement $-hK_x$, non nulle, est transférée au paquet d'atomes 311 et une quantité de mouvement $-hK_y$, non nulle, est transférée à l'autre paquet d'atomes 312.

Dans le mode de réalisation illustré sur les figures 8 à 10, les faisceaux lumineux recouvrent tous les atomes.

Les figures 11 à 13 illustrent un autre mode de réalisation d'interféromètre atomique de MZ à 3D dans lequel les faisceaux lumineux sont appliqués sélectivement sur chaque nuage ou paquet d'atomes.

La figure 11 est analogue à la figure 8.

Sur la figure 12, à l'instant t=T, une deuxième impulsion lumineuse est divisée en trois fois trois paires de faisceaux lumineux orthogonaux suivant l'axe X, suivant l'axe Y et suivant l'axe Z, chacune de ces trois paires de faisceaux lumineux étant adaptée pour former un miroir à 3D spatialement résolu au point 41 pour le premier nuage d'atomes 1.

L'aire de chaque paire de faisceaux lumineux est ici égale à $\pi$. Plus précisément, au point 41, la deuxième impulsion lumineuse comporte trois paires de faisceaux lumineux orthogonaux respectivement : une paire de faisceaux lumineux (711, 712) suivant l'axe X, une autre paire de faisceaux lumineux (713, 714) suivant l'axe Y et encore une autre une paire de faisceaux lumineux (715, 716) suivant l'axe Z. Ces trois paires de faisceaux lumineux orthogonaux (711, 712), (713, 714) et (715, 716) séparent et réfléchissent le premier nuage d'atomes 1 dans l'état $|2,hK_x,0,0\rangle$ en un paquet d'atomes 112 se propageant suivant l'axe Y et un autre paquet d'atomes 113 se propageant suivant l'axe Z à la vitesse incidente. La deuxième impulsion lumineuse comporte en outre trois autres paires de faisceaux lumineux orthogonaux respectivement : (721, 722) suivant l'axe X, (723, 724) suivant l'axe Y et (725, 726) suivant l'axe Z, ces trois autres paires de faisceaux lumineux étant adaptées pour former un miroir à 3D spatialement résolu au point 42 pour le deuxième nuage d'atomes 2. Au point 42, la deuxième impulsion lumineuse sépare et réfléchit le deuxième nuage d'atomes 2 dans l'état $|2,0,hK_y,0\rangle$ en un paquet d'atomes 211 se propageant suivant l'axe X et un autre paquet d'atomes 213 se propageant suivant l'axe Z à la vitesse incidente. Enfin, la deuxième impulsion lumineuse comporte encore trois autres paires de faisceaux lumineux orthogonaux respectivement : (731, 732) suivant l'axe X, (733, 734) suivant l'axe Y et (735, 736) suivant l'axe Z, ces trois autres paires de faisceaux lumineux étant adaptées pour former un miroir à 3D spatialement résolu au point 43 pour le troisième nuage d'atomes 3. Au point 45, la deuxième impulsion lumineuse (731, 732), (733, 734) et (735, 736) sépare et réfléchit le troisième nuage d'atomes 3 dans l'état $|2,0,0,hK_z\rangle$ en un paquet d'atomes 311 se propageant suivant l'axe X et un autre paquet d'atomes 312 se propageant suivant l'axe Y à la vitesse incidente.

Sur la figure 13, à l'instant t=2T, une troisième impulsion lumineuse comporte trois fois deux paires de faisceaux lumineux orthogonaux, chacune de ces deux paires de faisceaux lumineux étant adaptée pour former un dispositif de recombinaison à 2D.

La troisième impulsion lumineuse comporte deux paires de faisceaux lumineux orthogonaux respectivement : (811, 812) suivant l'axe X et (813, 814) suivant l'axe Y, ces deux paires de faisceaux lumineux étant adaptées pour former un dispositif de recombinaison spatialement résolu au point 51. Au point 51, la troisième impulsion lumineuse (811, 812) et (813, 814) recombine le paquet d'atomes 112 se propageant suivant l'axe Y avec le paquet d'atomes 211 se propageant suivant l'axe X pour former un premier interféromètre de MZ à 2D dans le plan XY. Le premier interféromètre mesure un déphasage $\Delta\Phi_{x,y}$ sensible à trois mesures inertielles ($a_x$, $a_y$ et $\Omega_z$).

La troisième impulsion lumineuse comporte deux autres paires de faisceaux lumineux orthogonaux (821, 822) suivant l'axe X et (825, 826) suivant l'axe Z, ces deux paires de faisceaux lumineux étant adaptées pour former un dispositif de recombinaison spatialement résolu au point 56. Au point 56, la troisième impulsion lumineuse (821, 822) et (825, 826) recombine le paquet d'atomes 311 se propageant le long de l'axe X et le paquet d'atomes 113 se propageant le long de l'axe Z pour former un deuxième interféromètre de MZ à 2D dans le plan XZ. Le deuxième interféromètre mesure un déphasage $\Delta\Phi_{z,x}$ sensible à trois mesures inertielles ($a_x$, $a_z$ et $\Omega_y$).

Enfin, la troisième impulsion lumineuse comporte encore deux autres paires de faisceaux lumineux orthogonaux (833, 834) suivant l'axe Y et (835, 836) suivant l'axe Z, ces deux autres paires de faisceaux lumineux étant adaptées pour former un dispositif de recombinaison spatialement résolu au point 55. Au point 55, la troisième impulsion lumineuse (833, 834) et (835, 836) recombine le paquet d'atomes 312 se propageant le long de l'axe Y et le paquet d'atomes 213 se propageant le long de l'axe Z pour former un troisième interféromètre de MZ à 2D dans le plan XZ. Le troisième interféromètre mesure un déphasage $\Delta\Phi_{y,z}$ sensible à trois mesures inertielles ($a_y$, $a_z$ et $\Omega_x$).

Pour éviter de transférer les atomes dans des états de mouvement parasites, ce processus nécessite des paires de faisceaux séparées alignées selon les arrêtes d'un cube, comme illustré sur les figures 11, 12 et 13. Finalement, à l'instant t=2T, les paquets d'atomes se recouvrent à trois coins opposés du cube 51, 55 et 56, où six paires de faisceaux (811, 812), (813, 814), (821, 822), (825, 826), (8311, 834), (835, 836) réalisent une troisième impulsion de recombinaison qui transfère une partie de la population de chaque état en mouvement dans chaque plan vers un état stationnaire. La détection spatialement résolue de ces neuf nuages permet d'obtenir une sensibilité aux vecteurs accélération et rotation.

Plus précisément, il y a 6 paquets en mouvement qui ont une quantité de mouvement soit $\hbar.k_x$, soit $\hbar.k_y$, soit $\hbar.k_z$ et, il y a aussi 3 paquets immobiles aux trois coins du cube 51, 55, 56. Dans chaque interféromètre de MZ, il y a deux ports : un port pour le nuage immobile et un autre port pour les nuages en déplacement dans deux directions possibles. Chaque composante de mesure inertielle peut alors être isolée de la manière décrite précédemment dans le cas à 2D en lien avec la figure 7.

La somme des phases $\Delta\Phi_{x,y}$, $\Delta\Phi_{y,z}$, et $\Delta\Phi_{z,x}$ obtenues par les interférences aux coins 51, 55, 56 du cube est particulièrement intéressante. Dans le cas où les vecteurs d'onde effectifs sont de même norme ($K_x = K_y = K_z = K$), cette somme est la suivante :

$$\Delta\Phi_{x,y} + \Delta\Phi_{y,z} + \Delta\Phi_{z,x} = 2\frac{\hbar}{m}K^2(\Omega_x + \Omega_y + \Omega_z)\,T^2 \qquad (9)$$

On observe que cette somme contient toutes les composantes du vecteur rotation $\Omega_x$, $\Omega_y$, et $\Omega_z$ et est insensible aux accélérations, y compris l'accélération de Coriolis due à la vitesse atomique initiale. La suppression de cette dépendance en vitesse est un avantage pour un gyroscope atomique qui peut ainsi bénéficier de la même précision absolue qu'un gravimètre atomique car toutes les quantités qui apparaissent dans le facteur d'échelle sont précisément connues.

Un interféromètre atomique multi-axes selon la présente divulgation trouve des applications pour la navigation inertielle, la géologie, la gradiométrie, la géodésie ou la sismologie.

**Revendications**

1. Système d'interféromètre atomique multi-axes comprenant :

   - une seule source (10) d'atomes froids ;
   - une source laser modulée temporellement pour générer une séquence d'impulsions lumineuses comprenant au moins une première impulsion lumineuse incidente sur la source (10) d'atomes froids à un instant t initial, une deuxième impulsion lumineuse à un instant égal à t+T et une dernière impulsion lumineuse à un instant égal à t+2T ;
   - la première impulsion lumineuse étant configurée pour transférer à la source (10) d'atomes froids une quantité de mouvement hKx dans une direction d'un premier axe (X) et, simultanément, une quantité de mouvement hKy dans une direction d'un deuxième axe (Y), de manière à séparer spatialement la source (10) d'atomes froids en au moins un premier nuage d'atomes (1, 11, 12) se propageant suivant une première trajectoire le long du premier axe (X) et un deuxième nuage d'atomes (2, 21, 22) se propageant suivant une deuxième trajectoire le long du deuxième axe (Y), le deuxième axe (Y) étant incliné par rapport au premier axe (X) ;
   - la deuxième impulsion lumineuse étant adaptée pour défléchir spatialement la première trajectoire d'au moins une partie du premier nuage d'atomes (1, 111) suivant le deuxième axe (Y) vers un premier point (51) et simultanément la deuxième trajectoire d'au moins une partie du deuxième nuage d'atomes (2, 211) suivant le premier axe (X) vers le premier point (51) ;
   - la dernière impulsion lumineuse étant adaptée pour recombiner ladite au moins une partie du premier nuage d'atomes (1, 111) et ladite au moins une partie du deuxième nuage d'atomes (2, 211) au premier point (51) et former un interféromètre atomique de Mach-Zehnder à au moins deux dimensions ;
   - un système de détection configuré pour mesurer un premier déphasage interférométrique entre ladite au moins une partie du premier nuage d'atomes (1, 111) et ladite au moins une partie du deuxième nuage d'atomes (2, 211), le premier déphasage interférométrique étant accumulé sur lesdites première et deuxième trajectoires entre la première impulsion lumineuse et la dernière impulsion lumineuse,

   dans lequel la première impulsion lumineuse est divisée en une première paire de faisceaux lumineux (61, 62) se propageant contra-propagativement suivant le premier axe (X) vers la source d'atomes et une autre première paire de faisceaux lumineux (63, 64) se propageant contra-propagativement suivant le deuxième axe (Y) vers la source (10) d'atomes froids, lesdites premières paires de faisceaux lumineux (61, 62, 63, 64) étant incidentes simultanément sur la source (10) d'atomes froids à l'instant t initial,

   la deuxième impulsion lumineuse est divisée en une deuxième paire de faisceaux lumineux (71, 72) se propageant contra-propagativement suivant le premier axe (X) et une autre deuxième paire de faisceaux lumineux (73, 74) se propageant contra-propagativement suivant le deuxième axe (Y), lesdites deuxièmes paires de faisceaux lumineux (71, 72, 73, 74) étant incidentes simultanément sur ladite au moins une partie du premier nuage d'atomes (1, 111) et ladite au moins une partie du deuxième nuage d'atomes (2, 211) et la dernière impulsion lumineuse (81, 82, 83, 84) est divisée en une dernière paire de faisceaux lumineux (81, 82) se propageant contra-propagativement suivant le premier axe (X) et une autre dernière paire de faisceaux lumineux (83, 84) se propageant contra-propagativement suivant le deuxième axe (Y) vers le premier point (51), lesdites dernières paires de faisceaux lumineux (81, 82, 83, 84) étant incidentes simultanément sur ladite au moins une partie du premier nuage d'atomes (1, 111) et ladite au moins une partie du deuxième nuage d'atomes (2, 211) au premier point (51).

2. Système d'interféromètre atomique multi-axes selon la revendication 1 comprenant en outre un système de traitement du signal adapté pour extraire du premier déphasage interférométrique un premier signal fonction d'une première accélération ($a_x$) de la source (10) d'atomes froids suivant le premier axe (X), d'une deuxième accélération ($a_y$) suivant le deuxième axe (Y) et d'une rotation ($\Omega_z$) autour d'un troisième axe (Z) incliné par rapport au premier axe (X) et au deuxième axe (Y).

3. Système d'interféromètre atomique multi-axes selon l'une des revendications 1 à 2 dans lequel la première impulsion est adaptée pour séparer spatialement par double diffraction la source (10) d'atomes froids en un premier paquet d'atomes (11) et un deuxième paquet d'atomes (12) se propageant en sens mutuellement opposés suivant le premier axe (X) et pour séparer spatialement par double diffraction la source (10) d'atomes froids en un troisième paquet d'atomes (21) et un quatrième paquet d'atomes (22) se propageant en sens mutuellement opposés suivant le deuxième axe (Y) ;

- la deuxième impulsion lumineuse étant adaptée pour défléchir simultanément une partie du premier paquet d'atomes (111) suivant le deuxième axe (Y) et une partie du troisième paquet d'atomes (211) suivant le premier axe (X) vers le premier point (51), et pour défléchir simultanément une autre partie du premier paquet d'atomes (112) suivant le deuxième axe (Y) et une partie du quatrième paquet d'atomes (221) suivant le premier axe (X) vers un deuxième point (52) et pour défléchir simultanément une partie du deuxième paquet d'atomes (121) suivant le deuxième axe (Y) et une autre partie du troisième paquet d'atomes (212) suivant le premier axe (X) vers un troisième point (53) et pour défléchir simultanément une autre partie du deuxième paquet d'atomes (122) suivant le deuxième axe (Y) et une autre partie du quatrième paquet d'atomes (222) suivant le premier axe (X) vers un quatrième point (54) ;

- la dernière impulsion lumineuse étant adaptée pour recombiner au premier point (51) la partie du premier paquet d'atomes (112) et la partie du troisième paquet d'atomes (211) formant un premier interféromètre atomique de Mach-Zehnder à deux dimensions dans un premier plan (XY), et pour recombiner au deuxième point (52) l'autre partie du premier paquet d'atomes (112) et la partie du quatrième paquet d'atomes (221) formant un deuxième interféromètre atomique de Mach-Zehnder à deux dimensions dans le premier plan (XY) et pour recombiner au troisième point (53) la partie du deuxième paquet d'atomes (121) et l'autre partie du troisième paquet d'atomes (212) formant un troisième interféromètre atomique de Mach-Zehnder à deux dimensions dans le premier plan (XY) et pour recombiner au quatrième point (54) l'autre partie du deuxième paquet d'atomes (122) suivant le deuxième axe (Y) et l'autre partie du quatrième paquet d'atomes (222) formant un quatrième interféromètre atomique de Mach-Zehnder à deux dimensions dans le premier plan (XY) ;

- le système de détection étant adapté pour mesurer en au moins trois points parmi les premier point (51), deuxième point (52), troisième point (53) et quatrième point (54) respectivement: le premier déphasage interférométrique du premier interféromètre atomique et/ou un deuxième déphasage interférométrique du deuxième interféromètre atomique et/ou un troisième déphasage interférométrique du troisième interféromètre atomique et/ou un quatrième déphasage interférométrique du quatrième interféromètre atomique.

4. Système d'interféromètre atomique multi-axes selon les revendications 2 et 3 dans lequel le système de traitement du signal est adapté pour extraire la première accélération suivant le premier axe (X), la deuxième accélération suivant le deuxième axe (Y) et la rotation autour du troisième axe (Z) par combinaison linéaire d'au moins trois parmi les premier déphasage interférométrique, deuxième déphasage interférométrique, troisième déphasage interférométrique et quatrième déphasage interférométrique.

5. Système d'interféromètre atomique multi-axes selon la revendication 3 ou 4 dans lequel le système de détection comporte un détecteur d'image résolu spatialement adapté pour détecter simultanément au moins trois parmi le premier déphasage interférométrique, le deuxième déphasage interférométrique, le troisième déphasage interférométrique et le quatrième déphasage interférométrique.

6. Système d'interféromètre atomique multi-axes selon la revendication 3 ou 4 dans lequel le système de détection comporte un premier détecteur adapté pour détecter le premier déphasage interférométrique autour du premier point (51), un deuxième détecteur adapté pour détecter le deuxième déphasage interférométrique autour du deuxième point (52), un troisième détecteur adapté pour détecter le troisième déphasage interférométrique autour du troisième point (53) et/ou un quatrième détecteur adapté pour détecter le quatrième déphasage interférométrique autour du quatrième point (54).

7. Système d'interféromètre atomique multi-axes selon la revendication 1 dans lequel la première impulsion lumineuse est divisée en outre en une autre première paire de faisceaux lumineux (65, 66) se propageant contra-propagativement suivant le troisième axe (Z) vers la source (10) d'atomes, lesdites premières paires de faisceaux lumineux (61, 62, 63, 64, 65, 66) étant incidentes simultanément sur la source (10) d'atomes froids à l'instant t initial, pour transférer à la source (10) d'atomes froids simultanément la quantité de mouvement hKx dans la direction du premier axe (X), la quantité de mouvement hKy dans la direction du deuxième axe (Y) et une quantité de mouvement hKz dans une direction du troisième axe (Z), de manière à séparer spatialement la source (10) d'atomes froids en le premier nuage d'atomes (1) se propageant suivant le premier axe (X), le deuxième nuage d'atomes (2) se propageant suivant le deuxième axe (Y) et un troisième nuage d'atomes (3) se propageant suivant le troisième axe (Z);

EP 3 870 937 B1

- la deuxième impulsion lumineuse étant adapté pour séparer spatialement et défléchir le premier nuage d'atomes (1) en un premier paquet d'atomes (112) se propageant suivant le deuxième axe (Y) vers un premier point (51) et un deuxième paquet d'atomes (113) se propageant suivant le troisième axe (Z) vers un deuxième point (56); et pour séparer spatialement et défléchir le deuxième nuage d'atomes (2) en un troisième paquet d'atomes (211) se propageant suivant le premier axe (X) vers le premier point (51) et un quatrième paquet d'atomes (213) se propageant suivant le troisième axe (Z) vers un troisième point (55), et pour séparer spatialement et défléchir le troisième nuage d'atomes (3) en un cinquième paquet d'atomes (311) se propageant suivant le premier axe (X) vers le deuxième point (56) et un sixième paquet d'atomes (312) se propageant suivant le deuxième axe (Y) vers le troisième point (55) ;

- la dernière impulsion lumineuse étant adaptée pour recombiner au premier point (51) le premier paquet d'atomes (112) et le troisième paquet d'atomes (211) formant un premier interféromètre atomique de Mach-Zehnder à deux dimensions dans un premier plan (XY), et pour recombiner au deuxième point (56) le deuxième paquet d'atomes (113) et le cinquième paquet d'atomes (311) formant un deuxième interféromètre atomique de Mach-Zehnder à deux dimensions dans un deuxième plan (XZ) et pour recombiner au troisième point (55) le quatrième paquet d'atomes (213) et le sixième paquet d'atomes (312) formant un troisième interféromètre atomique de Mach-Zehnder à deux dimensions dans un troisième plan (YZ), et

- le système de détection étant adapté pour mesurer simultanément le premier déphasage interférométrique du premier interféromètre atomique de Mach-Zehnder, un deuxième déphasage interférométrique du deuxième interféromètre atomique de Mach-Zehnder et un troisième déphasage interférométrique du troisième interféromètre atomique de Mach-Zehnder.

8. Système d'interféromètre atomique multi-axes selon la revendication 7 dans lequel la deuxième impulsion lumineuse est divisée en trois paires de faisceaux lumineux (711, 712, 713, 714, 715, 716) adaptés pour séparer spatialement et défléchir le premier nuage d'atomes (1) en un premier paquet d'atomes (112) se propageant suivant le deuxième axe (Y) vers le premier point (51) et un deuxième paquet d'atomes (113) se propageant suivant le troisième axe (Z) vers le deuxième point (56); la deuxième impulsion lumineuse comprenant trois autres paires de faisceaux lumineux (721, 722, 723, 724, 725, 726) adaptés pour séparer spatialement et défléchir le deuxième nuage d'atomes (2) en un troisième paquet d'atomes (211) se propageant suivant le premier axe (X) vers le premier point (51) et un quatrième paquet d'atomes (213) se propageant suivant le troisième axe (Z) vers le troisième point (55), et la deuxième impulsion lumineuse étant divisée en encore trois autres paires de faisceaux lumineux (731, 732, 733, 734, 735, 736) adaptées pour séparer spatialement et défléchir le troisième nuage d'atomes (3) en un cinquième paquet d'atomes (311) se propageant suivant le premier axe (X) vers le deuxième point (56) et un sixième paquet d'atomes (312) se propageant suivant le deuxième axe (Y) vers le troisième point (55) ; et

- dans lequel la dernière impulsion lumineuse est divisée en deux paires de faisceaux lumineux (811, 812, 813, 814) adaptés pour recombiner au premier point (51) le premier paquet d'atomes (112) et le troisième paquet d'atomes (211) formant le premier interféromètre atomique de Mach-Zehnder à deux dimensions dans le premier plan (XY), la dernière impulsion lumineuse étant divisée en deux autres paires de faisceaux lumineux (821, 822, 825, 826) adaptés pour recombiner au deuxième point (56) le deuxième paquet d'atomes (113) et le cinquième paquet d'atomes (311) formant le deuxième interféromètre atomique de Mach-Zehnder à deux dimensions dans le deuxième plan (XZ) et la dernière impulsion lumineuse étant divisée en encore deux autres paires de faisceaux lumineux (833, 834, 835, 836) adaptés pour recombiner au troisième point (55) le quatrième paquet d'atomes (213) et le sixième paquet d'atomes (312) formant le troisième interféromètre atomique de Mach-Zehnder à deux dimensions dans le troisième plan (YZ).

9. Système d'interféromètre atomique multi-axes selon la revendication 7 ou 8 dans lequel le système de détection comporte un détecteur d'image résolu spatialement adapté pour détecter simultanément le premier déphasage interférométrique au premier point (51), le deuxième déphasage interférométrique au deuxième point (52) et le troisième déphasage interférométrique au troisième point (53).

10. Système d'interféromètre atomique multi-axes selon la revendication 7 ou 8 dans lequel le système de détection comporte un premier détecteur adapté pour détecter le premier déphasage interférométrique au premier point (51), un deuxième détecteur adapté pour détecter le deuxième déphasage interférométrique au deuxième point (56) et un troisième détecteur adapté pour détecter le troisième déphasage interférométrique au troisième point (55).

11. Procédé d'interférométrie atomique multi-axes comprenant les étapes suivantes :

- génération d'une seule source (10) d'atomes froids ;

- génération d'une séquence d'impulsions lumineuses comprenant au moins une première impulsion lumineuse incidente sur la source (10) d'atomes froids à un instant t initial, une deuxième impulsion lumineuse à un instant égal à t+T et une dernière impulsion lumineuse à un instant égal à t+2T ;

- la première impulsion lumineuse divisée en une première paire de faisceaux lumineux (61, 62) se propageant contra-propagativement suivant un premier axe (X) vers la source d'atomes et une autre première paire de faisceaux lumineux (63, 64) se propageant contra-propagativement suivant un deuxième axe (Y) vers la source (10) d'atomes froids, lesdites premières paires de faisceaux lumineux (61, 62, 63, 64) étant incidentes simultanément sur la source (10) d'atomes froids à l'instant t initial, la première impulsion lumineuse étant configurée pour transférer à la source (10) d'atomes froids une quantité de mouvement hKx dans une direction du premier axe (X) et, simultanément, une quantité de mouvement hKy dans une direction du deuxième axe (Y), de manière à séparer spatialement la source (10) d'atomes froids en au moins un premier nuage d'atomes (1, 11, 12) se propageant suivant une première trajectoire le long du premier axe (X) et un deuxième nuage d'atomes (2, 21, 22) se propageant suivant une deuxième trajectoire le long du deuxième axe (Y), le deuxième axe (Y) étant incliné par rapport au premier axe (X) ;

- la deuxième impulsion lumineuse divisée en une deuxième paire de faisceaux lumineux (71, 72) se propageant contra-propagativement suivant le premier axe (X) et une autre deuxième paire de faisceaux lumineux (73, 74) se propageant contra-propagativement suivant le deuxième axe (Y), lesdites deuxièmes paires de faisceaux lumineux (71, 72, 73, 74) étant incidentes simultanément sur ladite au moins une partie du premier nuage d'atomes (1, 111) et ladite au moins une partie du deuxième nuage d'atomes (2, 211), la deuxième impulsion lumineuse étant adaptée pour défléchir spatialement la première trajectoire d'au moins une partie du premier nuage d'atomes (1, 111) suivant le deuxième axe (Y) vers un premier point (51) et simultanément la deuxième trajectoire d'au moins une partie du deuxième nuage d'atomes (2, 211) suivant le premier axe (X) vers le premier point (51) ;

- la dernière impulsion lumineuse (81, 82, 83, 84) divisée en une dernière paire de faisceaux lumineux (81, 82) se propageant contra-propagativement suivant le premier axe (X) et une autre dernière paire de faisceaux lumineux (83, 84) se propageant contra-propagativement suivant le deuxième axe (Y) vers le premier point (51), lesdites dernières paires de faisceaux lumineux (81, 82, 83, 84) étant incidentes simultanément sur ladite au moins une partie du premier nuage d'atomes (1, 111) et ladite au moins une partie du deuxième nuage d'atomes (2, 211) au premier point (51), la dernière impulsion lumineuse étant adaptée pour recombiner ladite au moins une partie du premier nuage d'atomes (1, 111) et ladite au moins une partie du deuxième nuage d'atomes (2, 211) au premier point (51) et former un interféromètre atomique de Mach-Zehnder à au moins deux dimensions ;

- détection d'au moins un premier déphasage interférométrique entre ladite au moins une partie du premier nuage d'atomes (1, 111) et ladite au moins une partie du deuxième nuage d'atomes (2, 211), le premier déphasage interférométrique étant accumulé sur lesdites première et deuxième trajectoires entre l'instant initial t et l'instant t+2T.

**Patentansprüche**

1. System mit mehrachsigem Atominterferometer mit :

- einer einzigen Quelle (10) kalter Atome ;
- einer zeitlich modulierten Laserquelle, um eine Folge von Lichtimpulsen zu erzeugen, die mindestens einen ersten, zu einem Anfangszeitpunkt t auf die Quelle (10) kalter Atome einfallenden Lichtimpuls, zu einem Zeitpunkt t+T einen zweiten Lichtimpuls und zu einem Zeitpunkt t+2T einen letzten Lichtimpuls aufweist,
- wobei der erste Lichtimpuls dazu ausgelegt ist, auf die Quelle (10) kalter Atome eine Bewegungsmenge hKx in einer Richtung einer ersten Achse (X) und gleichzeitig eine Bewegungsmenge hKy in einer Richtung einer zweiten Achse (Y) zu übertragen, um die Quelle (10) kalter Atome in mindestens eine erste Wolke von Atomen (1, 11, 12), die sich auf einer ersten Flugbahn entlang der ersten Achse (X) ausbreitet, und eine zweite Wolke von Atomen (2, 21, 22), die sich auf einer zweiten Flugbahn entlang der zweiten Achse (Y) ausbreitet, räumlich zu trennen, wobei die zweite Achse (Y) gegenüber der ersten Achse (X) geneigt ist ;
- wobei der zweite Lichtimpuls geeignet ist, die erste Flugbahn mindestens eines Teils der ersten Wolke von Atomen (1, 111) entlang der zweiten Achse (Y) zu einem ersten Punkt (51) hin, und gleichzeitig die zweite Flugbahn mindestens eines Teils der zweiten Wolke von Atomen (2, 211) entlang der ersten Achse (X) zu dem ersten Punkt (51) hin räumlich abzulenken ;
- wobei der letzte Lichtimpuls geeignet ist, den mindestens einen Teil der ersten Wolke von Atomen (1, 111) mit dem mindestens einen Teil der zweiten Wolke von Atomen (2, 211) am ersten Punkt (51) zu rekombinieren und ein Mach-Zehnder-Atominterferometer mit mindestens zwei Dimensionen zu bilden ;

- ein Erfassungssystem, das dazu ausgelegt ist, eine erste interferometrische Phasenverschiebung zwischen dem mindestens einen Teil der ersten Wolke von Atomen (1, 111) und dem mindestens einen Teil der zweiten Wolke von Atomen (2, 211) zu messen, wobei die erste interferometrische Phasenverschiebung auf der besagten ersten und zweiten Flugbahn zwischen dem ersten und dem letzten Lichtimpuls angesammelt wird,

wobei der erste Lichtimpuls in ein erstes Paar Lichtstrahlen (61, 62), das sich gegenläufig entlang der ersten Achse (X) zur Atomquelle hin ausbreitet, und ein weiteres erstes Paar Lichtstrahlen (63, 64), das sich gegenläufig entlang der zweiten Achse (Y) zur Atomquelle (10) hin ausbreitet, aufgeteilt wird, wobei die ersten Paar Lichtstrahlen (61, 62, 63, 64) zum Anfangszeitpunkt t gleichzeitig auf die Quelle (10) kalter Atome einfallen,

wobei der zweite Lichtimpuls in ein zweites Paar Lichtstrahlen (71, 72), das sich gegenläufig entlang der ersten Achse (X) ausbreitet, und ein weiteres zweites Paar Lichtstrahlen (73, 74), das sich gegenläufig entlang der zweiten Achse (Y) ausbreitet, aufgeteilt wird, wobei die zweiten Paar Lichtstrahlen (71, 72, 73, 74) gleichzeitig auf den mindestens einen Teil der ersten Wolke von Atomen (1, 111) und den mindestens einen Teil der zweiten Wolke von Atomen (2, 211) einfallen, und

der letzte Lichtimpuls (81, 82, 83, 84) in ein letztes Paar Lichtstrahlen (81, 82), das sich gegenläufig entlang der ersten Achse (X) ausbreitet, und ein weiteres letztes Paar Lichtstrahlen (83, 84), das sich gegenläufig entlang der zweiten Achse (Y) zum ersten Punkt (51) hin ausbreitet, aufgeteilt wird, wobei die letzten Paar Lichtstrahlen (81, 82, 83, 84) am ersten Punkt (51) gleichzeitig auf den mindestens einen Teil der ersten Wolke von Atomen (1, 111) und den mindestens einen Teil der zweiten Wolke von Atomen (2, 211) einfallen.

2. System mit mehrachsigem Atominterferometer gemäß Anspruch 1, das außerdem ein Signalverarbeitungssystem aufweist, das geeignet ist, aus der ersten interferometrischen Phasenverschiebung ein erstes Signal zu extrahieren, das von einer ersten Beschleunigung ($a_x$) der Quelle (10) von kalten Atomen entlang der ersten Achse (X), einer zweiten Beschleunigung ($a_y$) entlang der zweiten Achse (Y) und einer Drehung ($\Omega_z$) um eine dritte Achse (Z), die gegenüber der ersten Achse (X) und der zweiten Achse (Y) geneigt ist, abhängt.

3. System mit mehrachsigem Atominterferometer gemäß einem der Ansprüche 1 bis 2, bei dem der erste Impuls geeignet ist, die Quelle (10) kalter Atome durch doppelte Beugung räumlich in ein erstes Paket Atome (11) und ein zweites Paket Atome (12) aufzuteilen, die sich in zueinander gegenläufigen Richtungen entlang der ersten Achse (X) ausbreiten, und die Quelle (10) kalter Atome durch doppelte Beugung räumlich in ein drittes Paket Atome (21) und ein viertes Paket Atome (22) aufzuteilen, die sich in zueinander gegenläufigen Richtungen entlang der zweiten Achse (Y) ausbreiten ;

- wobei der zweite Lichtimpuls geeignet ist, gleichzeitig einen Teil des ersten Pakets Atome (111) entlang der zweiten Achse (Y) und einen Teil des dritten Pakets Atome (211) entlang der ersten Achse (X) zum ersten Punkt (51) hin abzulenken und gleichzeitig einen weiteren Teil des ersten Pakets Atome (112) entlang der zweiten Achse (Y) und einen weiteren Teil des vierten Pakets Atome (221) entlang der ersten Achse (X) zu einem zweiten Punkt (52) hin abzulenken und gleichzeitig einen Teil des zweiten Pakets Atome (121) entlang der zweiten Achse (Y) und einen weiteren Teil des dritten Pakets Atome (212) entlang der ersten Achse (X) zu einem dritten Punkt (53) hin abzulenken und gleichzeitig einen weiteren Teil des zweiten Pakets Atome (122) entlang der zweiten Achse (Y) und einen weiteren Teil des vierten Pakets Atome (222) entlang der ersten Achse (X) zu einem vierten Punkt (54) hin abzulenken ;

- wobei der letzte Lichtimpuls geeignet ist, am ersten Punkt (51) den Teil des ersten Pakets Atome (112) und den Teil des dritten Pakets Atome (211) zu rekombinieren und ein erstes Mach-Zehnder-Atominterferometer mit zwei Dimensionen in einer ersten Ebene (XY) zu bilden und am zweiten Punkt (52) den weiteren Teil des ersten Pakets Atome (112) und den Teil des vierten Pakets Atome (221) zu rekombinieren und ein zweites Mach-Zehnder-Atominterferometer mit zwei Dimensionen in der ersten Ebene (XY) zu bilden und am dritten Punkt (53) den Teil des zweiten Pakets Atome (121) und den weiteren Teil des dritten Pakets Atome (212) zu rekombinieren und ein drittes Mach-Zehnder-Interferometer mit zwei Dimensionen in der ersten Ebene (XY) zu bilden und am vierten Punkt (54) den weiteren Teil des zweiten Pakets Atome (122) entlang der zweiten Achse (Y) und den weiteren Teil der vierten Pakets Atome (222) zu rekombinieren und ein viertes Mach-Zehnder-Atominterferometer mit zwei Dimensionen in der ersten Ebene (XY) zu bilden ;

- wobei das Erfassungssystem geeignet ist, an mindestens drei Punkten unter dem ersten Punkt (51), dem zweiten Punkt (52), dem dritten Punkt (53) und dem vierten Punkt (54) jeweils die erste interferometrische Phasenverschiebung des ersten Atominterferometers und/oder eine zweite interferometrische Phasenverschiebung des zweiten Atominterferometers und/oder eine dritte interferometrische Phasenverschiebung des dritten Atominterferometers und/oder eine vierte interferometrische Phasenverschiebung des vierten Atominterferometers zu messen.

4. System mit mehrachsigem Atominterferometer gemäß Anspruch 1, bei dem das Signalverarbeitungssystem geeignet ist, die erste Beschleunigung entlang der ersten Achse (X), die zweite Beschleunigung entlang der zweiten Achse (Y) und die Drehung um die dritte Achse (Z) durch eine lineare Kombination von mindestens drei der ersten interferometrischen Phasenverschiebung, der zweiten interferometrischen Phasenverschiebung, der dritten interferometrischen Phasenverschiebung und der vierten interferometrischen Phasenverschiebung zu extrahieren.

5. System mit mehrachsigem Atominterferometer gemäß Anspruch 1, bei dem das Erfassungssystem einen räumlich aufgelösten Bilddetektor aufweist, der geeignet ist, gleichzeitig mindestens drei Phasenverschiebungen unter der ersten interferometrischen Phasenverschiebung, der zweiten interferometrischen Phasenverschiebung, der dritten interferometrischen Phasenverschiebung und der vierten interferometrischen Phasenverschiebung zu erfassen.

6. System mit mehrachsigem Atominterferometer gemäß Anspruch 3 oder 4, bei dem das Erfassungssystem einen ersten Detektor, der zum Erfassen der ersten interferometrischen Phasenverschiebung am ersten Punkt (51) geeignet ist, einen zweiten Detektor, der zum Erfassen der zweiten interferometrischen Phasenverschiebung am zweiten Punkt (52) geeignet ist, einen dritten Detektor, der zum Erfassen der dritten interferometrischen Phasenverschiebung am dritten Punkt (53) geeignet ist, und/oder einen vierten Detektor, der zum Erfassen der vierten interferometrischen Phasenverschiebung am vierten Punkt (54) geeignet ist, aufweist.

7. System mit mehrachsigem Atominterferometer gemäß Anspruch 1, bei dem der erste Lichtimpuls außerdem in ein weiteres erstes Paar Lichtstrahlen (65, 66) aufgeteilt ist, die sich gegenläufig entlang der dritten Achse (Z) zur Atomquelle (10) hin ausbreiten, wobei die ersten Paar Lichtstrahlen (61, 62, 63, 64, 65, 66) zum Anfangszeitpunkt t gleichzeitig auf die Quelle (10) kalter Atome einfallen, um auf die Quelle (10) kalter Atome gleichzeitig die Bewegungsmenge hKx in der Richtung der ersten Achse (X), die Bewegungsmenge hKy in der Richtung der zweiten Achse (Y) und eine Bewegungsmenge hKz in einer Richtung der dritten Achse (Z) zu übertragen, um die Quelle (10) kalter Atome räumlich in die erste Wolke von Atomen (1), die sich entlang der ersten Achse (X) ausbreitet, die zweite Wolke von Atomen (2), die sich entlang der zweiten Achse (Y) ausbreitet, und eine dritte Wolke von Atomen (3), die sich entlang der dritten Achse (Z) ausbreitet, zu trennen ;

  - wobei der zweite Lichtimpuls geeignet ist, die erste Wolke von Atomen (1) in ein erstes Paket Atome (112), das sich entlang der zweiten Achse (Y) zu einem ersten Punkt (51) hin ausbreitet, und ein zweites Paket Atome (113), das sich entlang der dritten Achse (Z) zu einem zweiten Punkt (56) hin ausbreitet, räumlich zu trennen und abzulenken und die zweite Atomwolke (2) in ein drittes Paket Atome (211), das sich entlang der ersten Achse (X) zum ersten Punkt (51) hin ausbreitet, und ein viertes Paket Atome (213), das sich entlang der dritten Achse (Z) zu einem dritten Punkt (55) hin ausbreitet, räumlich zu trennen und abzulenken und die dritte Atomwolke (3) in ein fünftes Paket Atome (311), das sich entlang der ersten Achse (X) zum zweiten Punkt (56) hin ausbreitet, und ein sechstes Paket Atome (312), das sich entlang der zweite Achse (Y) zum dritten Punkt (55) hin ausbreitet, räumlich zu trennen und abzulenken ;
  - wobei der letzte Lichtimpuls geeignet ist, am ersten Punkt (51) das erste Paket Atome (112) und das dritte Paket Atome (211) zu rekombinieren und ein erstes Mach-Zehnder-Atominterferometer mit zwei Dimensionen in einer ersten Ebene (XY) zu bilden und am zweiten Punkt (56) das zweite Paket Atome (113) und das fünfte Paket Atome (311) zu rekombinieren und ein zweites Mach-Zehnder-Atominterferometer mit zwei Dimensionen in der zweiten Ebene (XZ) zu bilden und am dritten Punkt (55) das vierte Paket Atome (213) und das sechste Paket Atome (312) zu rekombinieren und ein drittes Mach-Zehnder-Atominterferometer mit zwei Dimensionen in einer dritten Ebene (YZ) zu bilden, und
  - wobei das Erfassungssystem geeignet ist, die erste interferometrische Phasenverschiebung des ersten Mach-Zehnder-Atominterferometers, eine zweite interferometrische Phasenverschiebung des zweiten Mach-Zehnder-Atominterferometers und eine dritte interferometrische Phasenverschiebung des dritten Atominterferometers gleichzeitig zu messen.

8. System mit mehrachsigem Atominterferometer gemäß Anspruch 7, bei dem der zweite Lichtimpuls in drei Paar Lichtstrahlen (711, 712, 713, 714, 715, 716) getrennt ist, die geeignet sind, die erste Atomwolke (1) in ein erstes Paket Atome (112), das sich entlang der zweiten Achse (Y) zum ersten Punkt (51) hin ausbreitet, und ein zweites Paket Atome (113), das sich entlang der dritten Achse (Z) zum zweiten Punkt (56) hin ausbreitet, räumlich zu trennen und abzulenken ; wobei der zweite Lichtimpuls drei weitere Paar Lichtstrahlen (721, 722, 723, 724, 725, 726) aufweist, die geeignet sind, die zweite Atomwolke (2) in ein drittes Paket Atome (211), das sich entlang der ersten Achse (X) zum ersten Punkt (51) hin ausbreitet, und ein viertes Paket Atome (213), das sich entlang der dritten Achse (Z) zum dritten Punkt (55) hin ausbreitet, räumlich zu trennen und abzulenken und der zweite Lichtimpuls in drei weitere Paar Lichtstrahlen (731, 732, 733, 734, 735, 736) getrennt ist, die geeignet sind, die dritte Atomwolke (3) in ein fünftes Paket Atome (311), das sich entlang der ersten Achse (X) zum zweiten Punkt (56) hin und ein sechstes Paket Atome (312), das sich entlang der zweiten Achse (Y) zum dritten Punkt (55) hin ausbreitet, räumlich zu trennen und abzulenken ; und

- bei dem der letzte Lichtimpuls in zwei Paar Lichtstrahlen (811, 812, 813, 814) geteilt wird, die geeignet sind, am ersten Punkt (51) das erste Paket Atome (112) und das dritte Paket Atome (211) zu rekombinieren und das erste Mach-Zehnder-Atominterferometer mit zwei Dimensionen in der ersten Ebene (XY) zu bilden, wobei der letzte Lichtimpuls in zwei weitere Paar Lichtstrahlen (821, 822, 825, 826) geteilt wird, die geeignet sind, am zweiten Punkt (56) das zweite Paket Atome (113) und das fünfte Paket Atome (311) zu rekombinieren und das zweite Mach-Zehnder-Atominterferometer mit zwei Dimensionen in der zweiten Ebene (XZ) zu bilden, und wobei der letzte Lichtimpuls in noch zwei weitere Paar Lichtstrahlen (833, 834, 835, 836) geteilt wird, die geeignet sind, am dritten Punkt (55) das vierte Paket Atome (213) und das sechste Paket Atome (312) zu rekombinieren und das dritte Mach-Zehnder-Atominterferometer mit zwei Dimensionen in der dritten Ebene (YZ) zu bilden.

9. System mit mehrachsigem Atominterferometer gemäß Anspruch 7 oder 8, bei dem das Erfassungssystem einen räumlich aufgelösten Bilddetektor aufweist, der geeignet ist, die erste interferometrische Phasenverschiebung am ersten Punkt (51), die zweite interferometrische Phasenverschiebung am zweiten Punkt (52) und die dritte interferometrische Phasenverschiebung am dritten Punkt (53) zu erfassen.

10. System mit mehrachsigem Atominterferometer gemäß Anspruch 7 oder 8, bei dem das Erfassungssystem einen ersten Detektor, der geeignet ist, die erste interferometrische Phasenverschiebung am ersten Punkt (51) zu erfassen, einen zweiten Detektor, der geeignet ist, die zweite interferometrische Phasenverschiebung am zweiten Punkt (56) zu erfassen, und einen dritten Detektor, der geeignet ist, die dritte interferometrische Phasenverschiebung am dritten Punkt (55) zu erfassen, aufweist.

11. Mehrachsen-Atominterferometrieverfahren mit den folgenden Schritten :

- Erzeugen einer einzigen Quelle (10) kalter Atome ;
- Erzeugen einer Folge von Lichtimpulsen, die mindestens einen ersten, zu einem Anfangszeitpunkt t auf die Quelle (10) kalter Atome einfallenden Lichtimpuls, zu einem Zeitpunkt t+T einen zweiten Lichtimpuls und zu einem Zeitpunkt t+2T einen letzten Lichtimpuls aufweist;
- wobei der erste Lichtimpuls in ein erstes Paar Lichtstrahlen (61, 62), das sich gegenläufig entlang der ersten Achse (X) zur Atomquelle hin ausbreitet, und ein weiteres erstes Paar Lichtstrahlen (63, 64), das sich gegenläufig entlang der zweiten Achse (Y) zur Quelle (10) kalter Atome hin ausbreitet, aufgeteilt ist, wobei die ersten Paar Lichtstrahlen (61, 62, 63, 64) zum Anfangszeitpunkt t gleichzeitig auf die Quelle (10) kalter Atome einfallen, wobei der erste Lichtimpuls dazu ausgelegt ist, auf die Quelle (10) kalter Atome eine Bewegungsmenge hKx in einer Richtung der ersten Achse (X) und gleichzeitig eine Bewegungsmenge hKy in einer Richtung der zweiten Achse (Y) zu übertragen, um die Quelle (10) kalter Atome in mindestens eine erste Wolke von Atomen (1, 11, 12), die sich auf einer ersten Flugbahn entlang der ersten Achse (X) ausbreitet, und eine zweite Wolke von Atomen (2, 21, 22), die sich auf einer zweiten Flugbahn entlang der zweiten Achse (Y) ausbreitet, räumlich zu trennen, wobei die zweite Achse (Y) gegenüber der ersten Achse (X) geneigt ist ;
- wobei der zweite Lichtimpuls in ein zweites Paar Lichtstrahlen (71, 72), das sich gegenläufig entlang der ersten Achse (X) ausbreitet, und ein weiteres zweites Paar Lichtstrahlen (73, 74), das sich gegenläufig entlang der zweiten Achse (Y) ausbreitet, aufgeteilt ist, wobei die zweiten Paar Lichtstrahlen (71, 72, 73, 74) gleichzeitig auf den mindestens einen Teil der ersten Wolke von Atomen (1, 111) und den mindestens einen Teil der zweiten Wolke von Atomen (2, 211) einfallen, wobei der zweite Lichtimpuls geeignet ist, die erste Flugbahn mindestens eines Teils der ersten Wolke von Atomen (1, 111) entlang der zweiten Achse (Y) zu einem ersten Punkt (51) hin, und gleichzeitig die zweite Flugbahn mindestens eines Teils der zweiten Wolke von Atomen (2, 211) entlang der ersten Achse (X) zu dem ersten Punkt (51) hin räumlich abzulenken ;
- wobei der letzte Lichtimpuls (81, 82, 83, 84) in ein letztes Paar Lichtstrahlen (81, 82), das sich gegenläufig entlang der ersten Achse (X) ausbreitet, und ein weiteres letztes Paar Lichtstrahlen (83, 84), das sich gegenläufig entlang der zweiten Achse (Y) zum ersten Punkt (51) hin ausbreitet, aufgeteilt ist, wobei die letzten Paar Lichtstrahlen (81, 82, 83, 84) am ersten Punkt (51) gleichzeitig auf den mindestens einen Teil der ersten Wolke von Atomen (1, 111) und den mindestens einen Teil der zweiten Wolke von Atomen (2, 211) einfallen, wobei der letzte Lichtimpuls geeignet ist, den mindestens einen Teil der ersten Wolke von Atomen (1, 111) und den mindestens einen Teil der zweiten Wolke von Atomen (2, 211) am ersten Punkt (51) zu rekombinieren und ein Mach-Zehnder-Atominterferometer mit mindestens zwei Dimensionen zu bilden ;
- Erfassen einer ersten interferometrischen Phasenverschiebung zwischen dem mindestens einen Teil der ersten Wolke von Atomen (1, 111) und dem mindestens einen Teil der zweiten Wolke von Atomen (2, 211), wobei die erste interferometrische Phasenverschiebung auf der besagten ersten und zweiten Flugbahn zwischen dem Anfangszeitpunkt t und dem Zeitpunkt t+2T angesammelt wird.

**Claims**

1. A multi-axis atom interferometer system, comprising:

   - a single source (10) of cold atoms;
   - a temporally modulated laser source to generate a sequence of light pulses comprising at least one first light pulse incident on the source (10) of cold atoms at an initial time t, a second light pulse at a time equal to t+T and a last light pulse at a time equal to t+2T;
   - the first light pulse being configured to transfer to the source (10) of cold atoms a momentum $hK_x$ in a direction of a first axis (X), and, simultaneously, a momentum $hK_y$ in a direction of a second axis (Y), in such a way as to spatially split the source (10) of cold atoms into at least a first cloud of atoms (1, 11, 12) propagating along a first trajectory along the first axis (X) and a second cloud of atoms (2, 21, 22) propagating along a second trajectory along the second axis (Y), the second axis (Y) being inclined with respect to the first axis (X);
   - the second light pulse being adapted to spatially deflect the first trajectory of at least one part of the first cloud of atoms (1, 111) along the second axis (Y) towards a first point (51) and simultaneously the second trajectory of at least one part of the second cloud of atoms (2, 211) along the first axis (X) towards the first point (51);
   - the last light pulse being adapted to recombine said at least one part of the first cloud of atoms (1, 111) and said at least one part of the second cloud of atoms (2, 211) at the first point (51) and to form an at least two-dimensional Mach-Zehnder atom interferometer;
   - a detection system configured to measure a first interferometric phase-shift between said at least one part of the first cloud of atoms (1, 111) and said at least one part of the second cloud of atoms (2, 211), the first interferometric phase-shift being accumulated on said first and second trajectories between the first light pulse and the last light pulse,
   wherein the first light pulse is split into a first pair of light beams (61, 62) counter-propagating along the first axis (X) towards the source of atoms and another first pair of light beams (63, 64) counter-propagating along the second axis (Y) towards the source (10) of cold atoms, said first pairs of light beams (61, 62, 63, 64) being simultaneously incident on the source (10) of cold atoms at the initial time t,
   the second light pulse is split into a second pair of light beams (71, 72) counter-propagating along the first axis (X) and another second pair of light beams (73, 74) counter-propagating along the second axis (Y), said second pairs of light beams (71, 72, 73, 74) being simultaneously incident on said at least one part of the first cloud of atoms (1, 111) and said at least one part of the second cloud of atoms (2, 211) and
   the last light pulse (81, 82, 83, 84) is split into a last pair of light beams (81, 82) counter-propagating along the first axis (X) and another last pair of light beams (83, 84) counter-propagating along the second axis (Y) towards the first point (51), said last pairs of light beams (81, 82, 83, 84) being simultaneously incident on said at least one part of the first cloud of atoms (1, 111) and said at least one part of the second cloud of atoms (2, 211), at the first point (51).

2. The multi-axis atom interferometer system according to claim 1, further comprising a signal processing system adapted to extract from the first interferometric phase-shift a first signal function of a first acceleration ($a_x$) of the source (10) of cold atoms along the first axis (X), a second acceleration ($a_y$) along the second axis (Y) and a rotation ($\Omega_z$) about a third axis (Z) inclined with respect to the first axis (X) and to the second axis (Y).

3. The multi-axis atom interferometer system according to any one of claims 1 or 2, wherein the first light pulse is adapted to spatially split the source (10) of cold atoms by double diffraction into a first packet of atoms (11) and a second packet of atoms (12) propagating in mutually opposed directions along the first axis (X) and to spatially split the source (10) of cold atoms by double diffraction into a third packet of atoms (21) and a fourth packet of atoms (22) propagating in mutually opposed directions along the second axis (Y);

   - the second light pulse being adapted to simultaneously deflect a part of the first packet of atoms (111) along the second axis (Y) and a part of the third packet of atoms (211) along the first axis (X) towards the first point (51), and to simultaneously deflect another part of the first packet of atoms (112) along the second axis (Y) and a part of the fourth packet of atoms (221) along the first axis (X) towards a second point (52), and to simultaneously deflect a part of the second packet of atoms (121) along the second axis (Y) and another part of the third packet of atoms (212) along the first axis (X) towards a third point (53), and to simultaneously deflect another part of the second packet of atoms (122) along the second axis (Y) and another part of the fourth packet of atoms (222) along the first axis (X) towards a fourth point (54);

- the last light pulse being adapted to recombine at the first point (51) the part of the first packet of atoms (112) and the part of the third packet of atoms (211) forming a first two-dimensional Mach-Zehnder atom interferometer in a first plane (XY), and to recombine at the second point (52) the other part of the first packet of atoms (112) and the part of the fourth packet of atoms (221) forming a second two-dimensional Mach-Zehnder atom interferometer in the first plane (XY), and to recombine at the third point (53) the part of the second packet of atoms (121) and the other part of the third packet of atoms (212) forming a third two-dimensional Mach-Zehnder atom interferometer in the first plane (XY), and to recombine at the fourth point (54) the other part of the second packet of atoms (122) along the second axis (Y) and the other part of the fourth packet of atoms (222) forming a fourth two-dimensional Mach-Zehnder atom interferometer in the first plane (XY);

- the detection system being adapted to measure at at least three points among the first point (51), second point (52), third point (53) and fourth point (54), respectively: the first interferometric phase-shift of the first atom interferometer and/or a second interferometric phase-shift of the second atom interferometer and/or a third interferometric phase-shift of the third atom interferometer and/or a fourth interferometric phase-shift of the fourth atom interferometer.

4. The multi-axis atom interferometer system according to claims 2 and 3, wherein the signal processing system is adapted to extract the first acceleration along the first axis (X), the second acceleration along the second axis (Y) and the rotation about the third axis (Z) by linear combination of at least three among the first interferometric phase-shift, second interferometric phase-shift, third interferometric phase-shift and fourth interferometric phase-shift.

5. The multi-axis atom interferometer system according to claim 3 or 4, wherein the detection system includes a spatially resolved image sensor adapted to simultaneously detect at least three among the first interferometric phase-shift, the second interferometric phase-shift, the third interferometric phase-shift and the fourth interferometric phase-shift.

6. The multi-axis atom interferometer system according to claim 3 or 4, wherein the detection system includes a first detector adapted to detect the first interferometric phase-shift about the first point (51), a second detector adapted to detect the second interferometric phase-shift about the second point (52), a third detector adapted to detect the third interferometric phase-shift about the third point (53) and/or a fourth detector adapted to detect the fourth interferometric phase-shift about the fourth point (54).

7. The multi-axis atom interferometer system according to claim 1, wherein the first light pulse is further split into a first pair of light beams (65, 66) counter-propagating along the third axis (Z) towards the source (10) of atoms, said first pairs of light beam (61, 62, 63, 64, 65, 66) being simultaneously incident on the source (10) of cold atoms at the initial time t, to transfer to the source (10) of cold atoms simultaneously the momentum $\hbar K_x$ in the direction of the first axis (X), the momentum $\hbar K_y$ in the direction of the second axis (Y) and a momentum $\hbar K_z$ in a direction of the third axis (Z), in such a way as to spatially split the source (10) of cold atoms into the first cloud of atoms (1) propagating along the first axis (X), the second cloud of atoms (2) propagating along the second axis (Y) and a third cloud of atoms (3) propagating along the third axis (Z);

- the second light pulse being adapted to spatially split and deflect the first cloud of atoms (1) into a first packet of atoms (112) propagating along the second axis (Y) towards a first point (51) and a second packet of atoms (113) propagating along the third axis (Z) towards a second point (56); and to spatially spit and deflect the second cloud of atoms (2) into a third packet of atoms (211) propagating along the first axis (X) towards the first point (51) and a fourth packet of atoms (213) propagating along the third axis (Z) towards a third point (55), and to spatially split and deflect the third cloud of atoms (3) into a fifth packet of atoms (311) propagating along the first axis (X) towards the second point (56) and a sixth packet of atoms (312) propagating along the second axis (Y) towards the third point (55);

- the last light pulse being adapted to recombine at the first point (51) the first packet of atoms (112) and the third packet of atoms (211) forming a first two-dimensional Mach-Zehnder atom interferometer in a first plane (XY), and to recombine at the second point (56) the second packet of atoms (113) and the fifth packet of atoms (311) forming a second two-dimensional Mach-Zehnder atom interferometer in a second plane (XZ) and to recombine at the third point (55) the fourth packet of atoms (213) and the sixth packet of atoms (312) forming a third two-dimensional Mach-Zehnder atom interferometer in a third plane (YZ), and
- the detection system being adapted to simultaneously measure the first interferometric phase-shift of the first Mach-Zehnder atom interferometer, a second interferometric phase-shift of the second Mach-Zehnder atom interferometer and a third interferometric phase-shift of the third Mach-Zehnder atom interferometer.

8. The multi-axis atom interferometer system according to claim 7, wherein the second light pulse is split into three pairs of light beams (711, 712, 713, 714, 715, 716) adapted to spatially split and deflect the first cloud of atoms (1) into a first packet of atoms (112) propagating along the second axis (Y) towards the first point (51) and a second packet of atoms (113) propagating along the third axis (Z) towards the second point (56); the second light pulse comprising three other pairs of light beams (721, 722, 723, 724, 725, 726) adapted to spatially split and deflect the second cloud of atoms (2) into a third packet of atoms (211) propagating along the first axis (X) towards the first point (51) and a fourth packet of atoms (213) propagating along the third axis (Z) towards a third point (55), and the second light pulse being also split into three other pairs of light beams (731, 732, 733, 734, 735, 736) adapted to spatially split and deflect the third cloud of atoms (3) into a fifth packet of atoms (311) propagating along the first axis (X) towards the second point (56) and a sixth packet of atoms (312) propagating along the second axis (Y) towards the third point (55); and

- wherein the last light pulse is split into two pairs of light beams (811, 812, 813, 814) adapted to recombine at the first point (51) the first packet of atoms (112) and the third packet of atoms (211) forming the first two-dimensional Mach-Zehnder atom interferometer in the first plane (XY), the last light pulse being split into two other pairs of light beams (821, 822, 825, 826) adapted to recombine at the second point (56) the second packet of atoms (113) and the fifth packet of atoms (311) forming the second two-dimensional Mach-Zehnder atom interferometer in the second plane (XZ) and the last light pulse being further split into two other pairs of light beams (833, 834, 835, 836) adapted to recombine at the third point (55) the fourth packet of atoms (213) and the sixth packet of atoms (312) forming the third two-dimensional Mach-Zehnder atom interferometer in the third plane (YZ).

9. The multi-axis atom interferometer system according to claim 7 or 8, wherein the detection system includes a spatially resolved image sensor adapted to simultaneously detect the first interferometric phase-shift at the first point (51), the second interferometric phase-shift at the second point (52) and the third interferometric phase-shift at the third point (53).

10. The multi-axis atom interferometer system according to claim 7 or 8, wherein the detection system includes a first detector adapted to detect the first interferometric phase-shift at the first point (51), a second detector adapted to detect the second interferometric phase-shift at the second point (56) and a third detector adapted to detect the third interferometric phase-shift at the third point (55).

11. A multi-axis atom interferometry method comprising the following steps:

- generating a single source (10) of cold atoms;
- generating a sequence of light pulses comprising at least one first light pulse incident on the source (10) of cold atoms at an initial time t, a second light pulse at a time equal to t+T and a last light pulse at a time equal to t+2T;
- the first light pulse being split into a first pair of light beams (61, 62) counter-propagating along a first axis (X) towards the source (10) of cold atoms and another first pair of light beams (63, 64) counter-propagating along a second axis (Y) towards the source (10) of cold atoms, said first pairs of light beams (61, 62, 63, 64) being simultaneously incident on the source (10) of cold atoms at the initial time t, the first light pulse being configured to transfer to the source (10) of cold atoms a momentum $\hbar K_x$ in a direction of the first axis (X), and, simultaneously, a momentum $\hbar K_y$ in a direction of the second axis (Y), in such a way as to spatially split the source (10) of cold atoms into at least one first cloud of atoms (1, 11, 12) propagating along a first trajectory along the first axis (X) and one second cloud of atoms (2, 21, 22) propagating along a second trajectory along the second axis (Y), the second axis (Y) being inclined with respect to the first axis (X);
- the second light pulse being split into a second pair of light beams (71, 72) counter-propagating along the first axis (X) and an other second pair of light beams (73, 74) counter-propagating along the second axis (Y), said second pairs of light beams (71, 72, 73, 74) being simultaneously incident on the at least one part of the first cloud of atoms (1, 111) and the at least one part of the second cloud of atoms (2, 211), the second light pulse being adapted to spatially deflect the first trajectory of at least one part of the first cloud of atoms (1, 111) along the second axis (Y) towards a first point (51) and simultaneously the second trajectory of at least one part of the second cloud of atoms (2, 211) along the first axis (X) towards the first point (51);
- the last light pulse being split into a last pair of light beams (81, 82) counter-propagating along the first axis (X) and an other last pair of light beams (83, 84) counter-propagating along the second axis (Y) towards the first point (51), said last pairs of light beams (81, 82, 83, 84) being simultaneously incident on the at least one part of the first cloud of atoms (1, 111) and the at least one part of the second cloud of atoms (2, 211) at the first point (51), the last light pulse being adapted to recombine said at least one part of the first cloud of atoms (1, 111) and said at least one part of the second cloud of atoms (2, 221) at the first point (51) and to form an at least two-dimensional Mach-Zehnder atom interferometer;

- detecting at least one first interferometric phase-shift between said at least one part of the first cloud of atoms (1, 111) and said at least one part of the second cloud of atoms (2, 211), the first interferometric phase-shift being accumulated on said first and second trajectories between the initial time t and the time t+2T.

# Fig.1

# Fig.2

# Fig.3

# Fig.4

# Fig.5

$$|2,0,\hbar K_y\rangle \qquad |2,\hbar K_x,0\rangle$$

$\Omega_{Rabi}\, t\, /\, \pi$

# Fig.6A    Fig.6B    Fig.6C

## Fig.7

## Fig.11

Fig.8

Fig.9

Fig.10

Fig.12

Fig.13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2877430 A1

**Littérature non-brevet citée dans la description**

- **B. CANUEL et al.** Six-Axis inertial sensor using cold-atom interferometry. *PRL*, 2006, vol. 97, 010402

- **XUEJIAN WU et al.** Multiaxis atom interferometry with a single-diode laser and a pyramidal magneto-optical trap. *Optica*, 2018, vol. 4, 1545